(19) Europäisches Patentamt
European Patent Office
Office européen des brevets

(11) **EP 4 379 461 A1**

(12) **EUROPEAN PATENT APPLICATION**

(43) Date of publication:
**05.06.2024 Bulletin 2024/23**

(21) Application number: **23212724.1**

(22) Date of filing: **28.11.2023**

(51) International Patent Classification (IPC):
**G03B 9/06** *(2021.01)*

(52) Cooperative Patent Classification (CPC):
**G03B 9/06;** G03B 30/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.11.2022 TW 111146046**

(71) Applicant: **LARGAN PRECISION CO., LTD.**
**Taichung City 408 (TW)**

(72) Inventors:
- **SU, Heng-Yi**
  **408 Taichung City (TW)**

- **TSAI, Chia-Cheng**
  **408 Taichung City (TW)**
- **CHEN, Hao-Jan**
  **408 Taichung City (TW)**
- **CHOU, Ming-Ta**
  **408 Taichung City (TW)**

(74) Representative: **Jakelski & Althoff**
**Patentanwälte PartG mbB**
**Patentanwälte**
**Partnerschaftsgesellschaft**
**Mollenbachstraße 37**
**71229 Leonberg (DE)**

(54) **IMAGING LENS ASSEMBLY MODULE, CAMERA MODULE AND ELECTRONIC DEVICE**

(57)      An imaging lens assembly module includes an imaging lens assembly and a variable aperture module. The imaging lens assembly has an optical axis. The variable aperture module includes a light blocking sheet set, a fixed element, a movable element, and an annular light blocking portion. The light blocking sheet set includes at least two light blocking sheets, wherein the at least two light blocking sheets are mutually stacked along a circumferential direction surrounding the optical axis to form a variable aperture opening. The fixed element has a sidewall structure. The annular light blocking portion surrounds the optical axis to form a fixed aperture opening.

Fig. 1B

EP 4 379 461 A1

## Description

## BACKGROUND

Technical Field

The present disclosure relates to an imaging lens assembly module and a camera module. More particularly, the present disclosure relates to an imaging lens assembly module and a camera module applicable to portable electronic devices.

Description of Related Art

In recent years, because the rapid development of portable electronic devices, such as intelligent electronic devices, tablets, etc., are found throughout modern people's whole lives, the camera modules and the imaging lens assembly modules applied to portable electronic devices have also flourished. However, with the continuous advancement of technology, users have more requirements for the quality of imaging lens assembly modules. Therefore, developing an imaging lens assembly module that can correspond to the shooting environments with the different incoming light requirements becomes an essential and solving problem in the industry.

## SUMMARY

According to one aspect of the present disclosure, an imaging lens assembly module includes an imaging lens assembly and a variable aperture module. The imaging lens assembly has an optical axis. The variable aperture module is disposed on an object side of the imaging lens assembly, and the optical axis passes through a center of the variable aperture module. The variable aperture module includes a light blocking sheet set, a fixed element, a movable element, and an annular light blocking portion. The light blocking sheet set includes at least two light blocking sheets, wherein the at least two light blocking sheets are mutually stacked along a circumferential direction surrounding the optical axis to form a variable aperture opening. The fixed element is indirectly or directly connected to the light blocking sheet set, and the fixed element has a sidewall structure. The movable element is connected to the light blocking sheet set. The annular light blocking portion extends toward the optical axis along a direction perpendicular to the optical axis, wherein the annular light blocking portion surrounds the optical axis to form a fixed aperture opening. The sidewall structure of the fixed element extends from an image side to the object side of the imaging lens assembly. The movable element drives the light blocking sheet set to move relative to the fixed element, so that an aperture size of the variable aperture opening is variable. When a focal length of the image lens assembly is EFL, a diameter of the fixed aperture opening is Df, and a maximum outer diameter of the sidewall structure of the fixed element is Ds, the following conditions are satisfied: $0.5 < EFL/Df < 5.2$; and $Df < Ds$.

According to the imaging lens assembly module of the foregoing aspect, wherein when a shortest distance between the light blocking sheet set and the fixed aperture opening along a direction parallel to the optical axis is d1, the following condition can be satisfied: $0\ mm < d1 < 1.5\ mm$.

According to the imaging lens assembly module of the foregoing aspect, wherein when the shortest distance between the light blocking sheet set and the fixed aperture opening along the direction parallel to the optical axis is d1, the following condition can be satisfied: $0.05\ mm < d1 < 1.2\ mm$.

According to the imaging lens assembly module of the foregoing aspect, wherein the annular light blocking portion can be disposed on the movable element.

According to the imaging lens assembly module of the foregoing aspect, wherein the variable aperture module can further include a frame element. The frame element can be coupled with the fixed element.

According to the imaging lens assembly module of the foregoing aspect, wherein the annular light blocking portion can be disposed on at least one of the movable element and the frame element.

According to the imaging lens assembly module of the foregoing aspect, wherein the variable aperture module can further include a rolling support element and a driving mechanism. The rolling support element can be disposed between the movable element and the frame element, and the movable element can have a rotational degree of freedom along the circumferential direction. The driving mechanism can be for driving the movable element to rotate along the circumferential direction and then driving the light blocking sheet set to adjust the aperture size of the variable aperture opening.

According to the imaging lens assembly module of the foregoing aspect, wherein the driving mechanism can include at least one coil and at least one magnet. The at least one magnet can be disposed along the circumferential direction, wherein the at least one magnet can be disposed corresponding to the at least one coil.

According to the imaging lens assembly module of the foregoing aspect, wherein the variable aperture module can be coupled with the imaging lens assembly.

According to the imaging lens assembly module of the foregoing aspect, wherein a frame element of the variable aperture module can be physically contacted with the imaging lens assembly.

According to the imaging lens assembly module of the foregoing aspect, wherein the fixed element can be physically contacted with the imaging lens assembly.

According to the imaging lens assembly module of the foregoing aspect, wherein when a shortest distance between the light blocking sheet set and a minimum aperture of the imaging lens assembly along a direction parallel to the optical axis is d2, the following condition can be satisfied: $0.1\ mm < d2 < 2.5\ mm$.

According to the imaging lens assembly module of the foregoing aspect, wherein when the shortest distance between the light blocking sheet set and the minimum aperture of the imaging lens assembly along the direction parallel to the optical axis is d2, the following condition can be satisfied: 0.15 mm < d2 < 1.9 mm.

According to the imaging lens assembly module of the foregoing aspect, wherein when a diameter of the minimum aperture of the imaging lens assembly is Db, and the diameter of the fixed aperture opening is Df, the following condition can be satisfied: 0.2 < Db/Df < 1.

According to the imaging lens assembly module of the foregoing aspect, wherein the light blocking sheet set can be made of a plastic material.

According to one aspect of the present disclosure, a camera module includes the imaging lens assembly module according to the aforementioned aspect.

According to one aspect of the present disclosure, an electronic device includes the camera module according to the aforementioned aspect.

According to one aspect of the present disclosure, an imaging lens assembly module includes an imaging lens assembly and a variable aperture module. The imaging lens assembly has an optical axis. The variable aperture module is disposed on an object side of the imaging lens assembly, the optical axis passes through a center of the variable aperture module, and the variable aperture module includes a light blocking sheet set, a fixed element, and a movable element. The light blocking sheet set includes at least two light blocking sheets, wherein the at least two light blocking sheets are mutually stacked along a circumferential direction surrounding the optical axis to form a variable aperture opening. The fixed element is indirectly or directly connected to the light blocking sheet set, and the fixed element has a sidewall structure and an annular light blocking portion. The annular light blocking portion extends toward the optical axis along a direction perpendicular to the optical axis, and the annular light blocking portion surrounds the optical axis to form a fixed aperture opening. The movable element is connected to the light blocking sheet set. The sidewall structure of the fixed element extends from an image side to the object side of the imaging lens assembly. The movable element drives the light blocking sheet set to move relative to the fixed element, so that an aperture size of the variable aperture opening is variable. When a focal length of the image lens assembly is EFL, a diameter of the fixed aperture opening is Df, and a maximum outer diameter of the sidewall structure of the fixed element is Ds, the following conditions are satisfied: 0.5 < EFL/Df < 5.2; and Df < Ds.

According to the imaging lens assembly module of the foregoing aspect, wherein when a shortest distance between the light blocking sheet set and the fixed aperture opening along a direction parallel to the optical axis is d1, the following condition can be satisfied: 0 mm < d1 < 1.5 mm.

According to the imaging lens assembly module of the foregoing aspect, wherein when the shortest distance between the light blocking sheet set and the fixed aperture opening along the direction parallel to the optical axis is d1, the following condition can be satisfied: 0.05 mm < d1 < 1.2 mm.

According to the imaging lens assembly module of the foregoing aspect, wherein the sidewall structure and the annular light blocking portion can be integrally formed.

According to the imaging lens assembly module of the foregoing aspect, wherein the variable aperture module can further include a rolling support element and a driving mechanism. The rolling support element can be disposed between the fixed element and the movable element, and the movable element can have a rotational degree of freedom along the circumferential direction. The driving mechanism can be for driving the movable element to rotate along the circumferential direction and then driving the light blocking sheet set to adjust the aperture size of the variable aperture opening.

According to the imaging lens assembly module of the foregoing aspect, wherein the driving mechanism can include at least one coil and at least one magnet. The at least one magnet can be disposed along the circumferential direction, wherein the at least one magnet can be disposed corresponding to the at least one coil.

According to the imaging lens assembly module of the foregoing aspect, wherein the variable aperture module can further include a frame element. The frame element can be coupled with the fixed element.

According to the imaging lens assembly module of the foregoing aspect, wherein the variable aperture module can further include a rolling support element and a driving mechanism. The rolling support element can be disposed between the movable element and the frame element, and the movable element can have a rotational degree of freedom along the circumferential direction. The driving mechanism can be for driving the movable element to rotate along the circumferential direction and then driving the light blocking sheet set to adjust the aperture size of the variable aperture opening.

According to the imaging lens assembly module of the foregoing aspect, wherein the driving mechanism can include at least one coil and at least one magnet. The at least one magnet can be disposed along the circumferential direction, wherein the at least one magnet can be disposed corresponding to the at least one coil.

According to the imaging lens assembly module of the foregoing aspect, wherein the variable aperture module can be coupled with the imaging lens assembly.

According to the imaging lens assembly module of the foregoing aspect, wherein the fixed element can be physically contacted with the imaging lens assembly.

According to the imaging lens assembly module of the foregoing aspect, wherein when a shortest distance between the light blocking sheet set and a minimum aperture of the imaging lens assembly along a direction parallel to the optical axis is d2, the following condition can be satisfied: 0.1 mm < d2 < 2.5 mm.

According to the imaging lens assembly module of the foregoing aspect, wherein when the shortest distance between the light blocking sheet set and the minimum aperture of the imaging lens assembly along the direction parallel to the optical axis is d2, the following condition can be satisfied: 0.15 mm < d2 < 1.9 mm.

According to the imaging lens assembly module of the foregoing aspect, wherein when a diameter of the minimum aperture of the imaging lens assembly is Db, and the diameter of the fixed aperture opening is Df, the following condition can be satisfied: 0.2 < Db/Df < 1.

According to the imaging lens assembly module of the foregoing aspect, wherein the light blocking sheet set can be made of a plastic material.

## BRIEF DESCRIPTION OF THE DRAWINGS

The present disclosure can be more fully understood by reading the following detailed description of the embodiment, with reference made to the accompanying drawings as follows:

Fig. 1A is a three-dimensional schematic view of an imaging lens assembly module according to the 1st embodiment of the present disclosure.

Fig. 1B is an exploded view of the imaging lens assembly module according to the 1st embodiment of Fig. 1A.

Fig. 1C is another exploded view of the imaging lens assembly module according to the 1st embodiment of Fig. 1A.

Fig. 1D is a state schematic view of the variable aperture module with a minimum aperture opening according to the 1st embodiment of Fig. 1A.

Fig. 1E is a cross-sectional view along Line 1E-1E of the imaging lens assembly module according to the 1st embodiment of Fig. 1D.

Fig. 1F is a state schematic view of the variable aperture module with a maximum aperture opening according to the 1st example of the 1st embodiment of Fig. 1A.

Fig. 1G is a cross-sectional view along Line 1G-1G of the imaging lens assembly module according to the 1st example of the 1st embodiment of Fig. 1F.

Fig. 1H is a cross-sectional view of the imaging lens assembly module according to the 2nd example of the 1st embodiment of Fig. 1F.

Fig. 1I is a cross-sectional view of the imaging lens assembly module according to the 3rd example of the 1st embodiment of Fig. 1F.

Fig. 2A is a three-dimensional schematic view of an imaging lens assembly module according to the 2nd embodiment of the present disclosure.

Fig. 2B is an exploded view of the imaging lens assembly module according to the 2nd embodiment of Fig. 2A.

Fig. 2C is another exploded view of the imaging lens assembly module according to the 2nd embodiment of Fig. 2A.

Fig. 2D is a state schematic view of the variable aperture module with a minimum aperture opening according to the 2nd embodiment of Fig. 2A.

Fig. 2E is a cross-sectional view along Line 2E-2E of the imaging lens assembly module according to the 2nd embodiment of Fig. 2D.

Fig. 2F is a state schematic view of the variable aperture module with a maximum aperture opening according to the 1st example of the 2nd embodiment of Fig. 2A.

Fig. 2G is a cross-sectional view along Line 2G-2G of the imaging lens assembly module according to the 1st example of the 2nd embodiment of Fig. 2F.

Fig. 2H is a cross-sectional view of the imaging lens assembly module according to the 2nd example of the 2nd embodiment of Fig. 2F.

Fig. 2I is a cross-sectional view of the imaging lens assembly module according to the 3rd example of the 2nd embodiment of Fig. 2F.

Fig. 3A is an exploded view of an imaging lens assembly module according to the 3rd embodiment of the present disclosure.

Fig. 3B is another exploded view of the imaging lens assembly module according to the 3rd embodiment of Fig. 3A.

Fig. 3C is a state schematic view of the variable aperture module with a minimum aperture opening according to the 3rd embodiment of Fig. 3A.

Fig. 3D is a cross-sectional view along Line 3D-3D of the imaging lens assembly module according to the 3rd embodiment of Fig. 3C.

Fig. 3E is a state schematic view of the variable aperture module with a maximum aperture opening according to the 1st example of the 3rd embodiment of Fig. 3A.

Fig. 3F is a cross-sectional view along Line 3F-3F of the imaging lens assembly module according to the 1st example of the 3rd embodiment of Fig. 3E.

Fig. 3G is a cross-sectional view of the imaging lens assembly module according to the 2nd example of the 3rd embodiment of Fig. 3E.

Fig. 3H is a cross-sectional view of the imaging lens assembly module according to the 3rd example of the 3rd embodiment of Fig. 3E.

Fig. 4A is a three-dimensional schematic view of an imaging lens assembly module according to the 4th embodiment of the present disclosure.

Fig. 4B is an exploded view of the imaging lens assembly module according to the 4th embodiment of Fig. 4A.

Fig. 4C is another exploded view of the imaging lens assembly module according to the 4th embodiment of Fig. 4A.

Fig. 4D is a state schematic view of the variable aperture module with a minimum aperture opening according to the 4th embodiment of Fig. 4A.

Fig. 4E is a cross-sectional view along Line 4E-4E of the imaging lens assembly module according to the 4th embodiment of Fig. 4D.

Fig. 4F is a state schematic view of the variable aperture module with a maximum aperture opening according to the 1st example of the 4th embodiment of Fig. 4A.

Fig. 4G is a cross-sectional view along Line 4G-4G of the imaging lens assembly module according to the 1st example of the 4th embodiment of Fig. 4F.

Fig. 4H is a cross-sectional view of the imaging lens assembly module according to the 2nd example of the 4th embodiment of Fig. 4F.

Fig. 4I is a cross-sectional view of the imaging lens assembly module according to the 3rd example of the 4th embodiment of Fig. 4F.

Fig. 5A is a schematic view of an electronic device according to the 5th embodiment of the present disclosure.

Fig. 5B is another schematic view of the electronic device according to the 5th embodiment of Fig. 5A.

Fig. 5C is a schematic view of an image captured via the electronic device according to the 5th embodiment of Fig. 5A.

Fig. 5D is another schematic view of the image captured via the electronic device according to the 5th embodiment of Fig. 5A.

Fig. 5E is the other schematic view of the image captured via the electronic device according to the 5th embodiment of Fig. 5A.

Fig. 6 is a schematic view of an electronic device according to the 6th embodiment of the present disclosure.

## DETAILED DESCRIPTION

The present disclosure provides an imaging lens assembly module including an imaging lens assembly and a variable aperture module. The imaging lens assembly has an optical axis. The variable aperture module is disposed on an object side of the imaging lens assembly, and the optical axis passes through a center of the variable aperture module. The variable aperture module includes a light blocking sheet set, a fixed element, a movable element, and an annular light blocking portion. The light blocking sheet set includes at least two light blocking sheets, wherein the at least two light blocking sheets are mutually stacked along a circumferential direction surrounding the optical axis to form a variable aperture opening. The fixed element is indirectly or directly connected to the light blocking sheet set, wherein the fixed element has a sidewall structure, and the sidewall structure of the fixed element extends from an image side to the object side of the imaging lens assembly. The movable element is connected to the light blocking sheet set. The annular light blocking portion extends toward the optical axis along a direction perpendicular to the optical axis, wherein the annular light blocking portion surrounds the optical axis to form a fixed aperture opening. The movable element drives the light blocking sheet set to move relative to the fixed element, so that an aperture size of the variable aperture opening is variable. When a focal length of the image lens assembly is EFL, a diameter of the fixed aperture opening is Df, and a maximum outer diameter of the sidewall structure of the fixed element is Ds, the following conditions are satisfied: $0.5 < EFL/Df < 5.2$; and $Df < Ds$.

By the arrangements that a fixed f-number is provided by the annular light blocking portion, and a variable f-number is provided by the variable aperture opening, the imaging lens assembly module can correspond to the shooting environments with the different amounts of incident light, and the imaging quality can be improved. Furthermore, by that the sidewall structure extends along with the shape of the imaging lens assembly, the light blocking sheet set of the variable aperture module can be closer to the imaging lens assembly, thereby enhancing an allowance of optical design.

Furthermore, a fixed f-number of the imaging lens assembly can be defined by the fixed aperture opening. When the fixed aperture opening is an aperture stop of the imaging lens assembly, and the fixed f-number is F#, the following condition is satisfied: F# = EFL/Df.

The fixed element can have the annular light blocking portion, wherein the sidewall structure and the annular light blocking portion can be integrally formed, and the annular light blocking portion is connected to the sidewall structure first, and then the sidewall structure is connected to the fixed element, but the present disclosure is not limited thereto. In detail, when the annular light blocking portion is observed from a cross-section, the annular light blocking portion gradually shrinks and intersects in a direction close to the optical axis so as to present a pencil tip-shaped, but the present disclosure is not limited thereto. Therefore, the fixed f-number can be defined by the fixed element, thereby enhancing the allowance of optical design.

Further, the variable aperture module can further include a frame element, wherein the frame element is coupled with the fixed element. Therefore, an assembling structure of the variable aperture module can be more stable by the arrangement of the frame element, so that the yield rate of products can be increased. Furthermore, the annular light blocking portion can be disposed on at least one of the movable element and the frame element, wherein the annular light blocking portion can be integrally formed by a plastic injection method, or the annular light blocking portion can be correspondingly assembled with an annular light blocking sheet, or the annular light blocking portion can be made by embedding with a metal spacer and then forming by an insert molding method, but the present disclosure is not limited thereto. Therefore, the fixed f-number can be defined by the movable element or the frame element so as to enhance the allowance of optical design.

The variable aperture module can further include a rolling support element and a driving mechanism. The rolling support element is disposed between the movable element and the frame element, and the movable element has a rotational degree of freedom along the circumferential direction. The driving mechanism is for driving the movable element to rotate along the circumferential direction and then driving the light blocking sheet set to adjust the aperture size of the variable aperture opening. Therefore, a radial positioning and an axial supporting between the movable element and the frame element can be more precise by the arrangement of the rolling support element, so that the working quality of the variable aperture module can be enhanced.

Furthermore, by the arrangement that the rolling support element is disposed between the fixed element and the movable element, the movable element has a rotational degree of freedom along the circumferential direction. Therefore, the radial positioning and the axial supporting between the fixed element and the movable element can be more precise by the arrangement of the rolling support element, so that the working quality of the variable aperture module can be enhanced.

The driving mechanism can include at least one coil and at least one magnet, wherein the magnet is disposed along the circumferential direction, and the magnet is disposed corresponding to the coil. Therefore, the arrangement with better driving efficiency can be obtained.

The variable aperture module can be coupled with the imaging lens assembly, and the frame element can be physically contacted with the imaging lens assembly. Therefore, the variable aperture module abuts the imaging lens assembly, and the assemble stability of the imaging lens assembly module can be enhanced.

Furthermore, the fixed element can be physically contacted with the imaging lens assembly. Therefore, the variable aperture module abuts the imaging lens assembly, and the assemble stability of the imaging lens assembly module can be enhanced.

The light blocking sheet set can be made of a plastic material, wherein the plastic material can be a polyethylene terephthalate (PET), and a surface of the light blocking sheet set made of PET is coated with a light-blocking layer or treated with sandblasting and then coated with an anti-reflective layer, but the present disclosure is not limited thereto. Therefore, it is favorable for enhancing the production efficiency of the light blocking sheet set.

When a shortest distance between the light blocking sheet set and the fixed aperture opening along a direction parallel to the optical axis is d1, the following condition can be satisfied: 0 mm < d1 < 1.5 mm. Therefore, a better light blocking effect of the variable aperture module can be obtained while filing the aforementioned range. Furthermore, the following condition can be satisfied: 0.05 mm < d1 < 1.2 mm.

When a shortest distance between the light blocking sheet set and a minimum aperture of the imaging lens assembly along the direction parallel to the optical axis is d2, the following condition can be satisfied: 0.1 mm < d2 < 2.5 mm. Therefore, a better light blocking effect of the variable aperture module can be obtained while filing the aforementioned range. Furthermore, the following condition can be satisfied: 0.15 mm < d2 < 1.9 mm.

When a diameter of the minimum aperture of the imaging lens assembly is Db, and a diameter of the fixed aperture opening is Df, the following condition can be satisfied: 0.2 < Db/Df < 1. Therefore, a better light blocking effect of the fixed aperture opening can be obtained while filing the aforementioned range.

Each of the aforementioned features of the imaging lens assembly module of the present disclosure can be utilized in numerous combinations, so as to achieve the corresponding functionality.

The present disclosure further provides a camera module including the aforementioned imaging lens assembly module.

The present disclosure further provides an electronic device including the aforementioned camera module.

According to the above description of the present disclosure, the following specific embodiments and examples are provided for further explanation.

<1st embodiment>

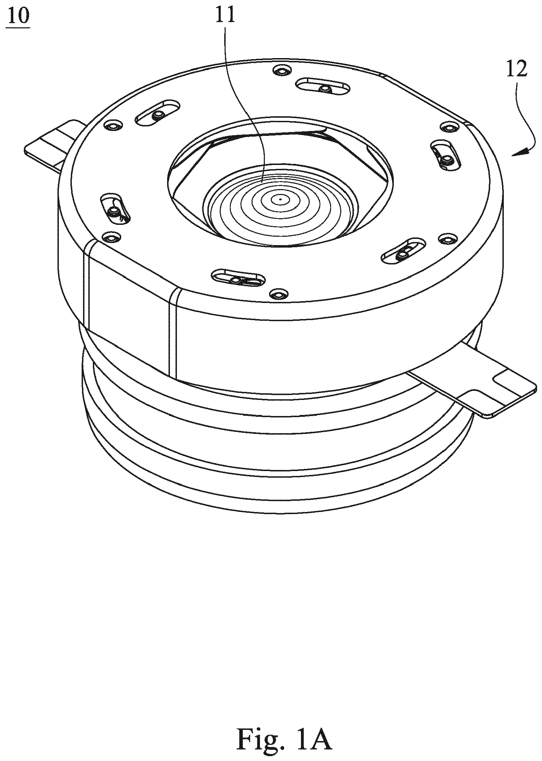

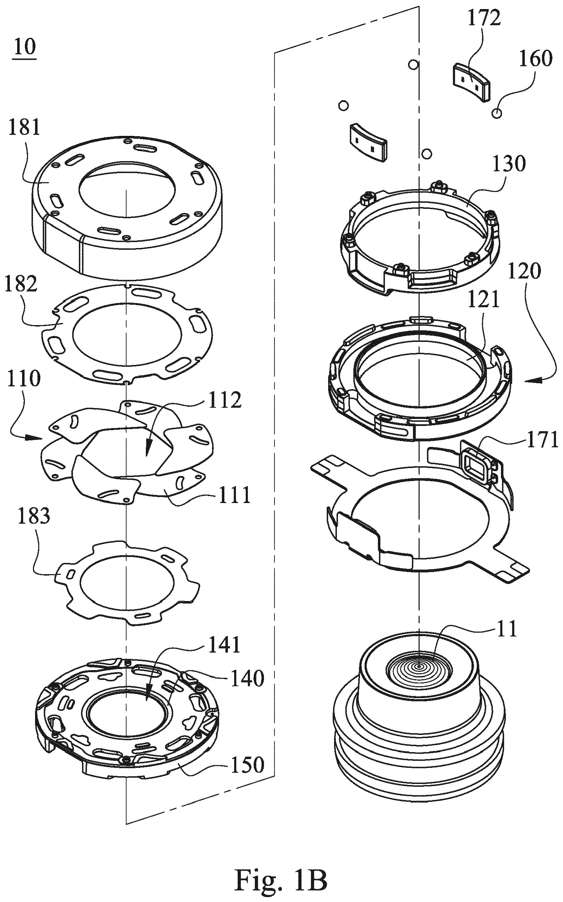

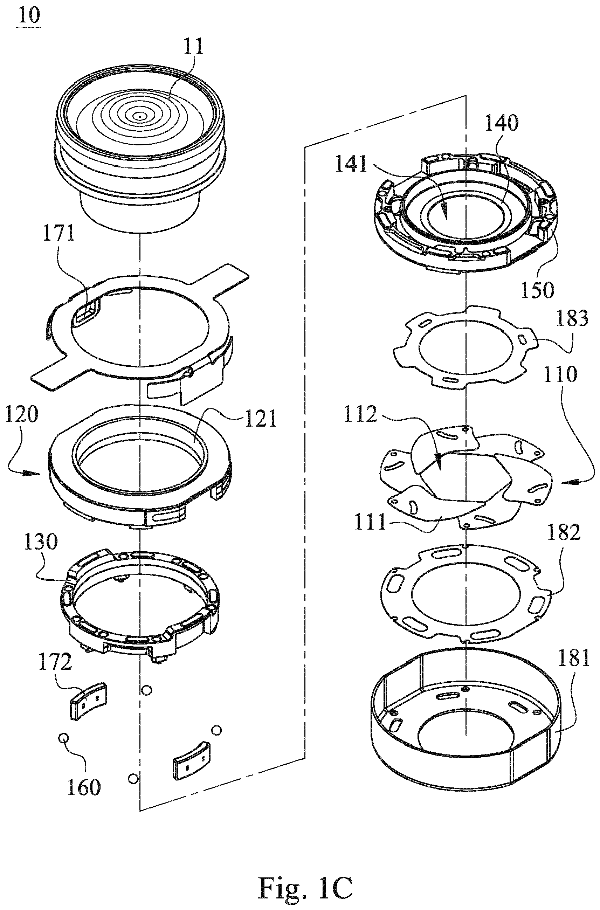

Fig. 1A is a three-dimensional schematic view of an imaging lens assembly module 10 according to the 1st embodiment of the present disclosure. Fig. 1B is an exploded view of the imaging lens assembly module 10 according to the 1st embodiment of Fig. 1A. Fig. 1C is another exploded view of the imaging lens assembly module 10 according to the 1st embodiment of Fig. 1A. As shown in Fig. 1A to Fig. 1C, the imaging lens assembly module 10 includes an imaging lens assembly 11 and a variable aperture module 12, wherein the imaging lens assembly 11 has an optical axis X. The variable aperture module 12 is disposed on an object side of the imaging lens assembly 11, the optical axis X passes through a center of the variable aperture module 12, and the variable aperture module 12 is coupled with the imaging lens assembly 11.

The variable aperture module 12 includes a light blocking sheet set 110, a fixed element 120, a movable element 130, and an annular light blocking portion 140. The light blocking sheet set 110 includes six light blocking sheets 111, wherein the six light blocking sheets 111 are mutually stacked along a circumferential direction surrounding the optical axis X to form a variable aperture opening 112. The fixed element 120 is indirectly or directly connected to the light blocking sheet set 110, and the fixed element 120 has a sidewall structure 121. The sidewall structure 121 of the fixed element 120 extends from an image side to the object side of the imaging lens assembly 11. The movable element 130 is connected to the light blocking sheet set 110, wherein the movable element 130 drives the light blocking sheet set 110 to move relative to the fixed element 120, so that an aperture size of the variable aperture opening 112 is variable. The annular light blocking portion 140 extends toward the optical axis X along a direction perpendicular to the optical axis X, wherein the annular light blocking portion 140 surrounds the optical axis X to form a fixed aperture opening 141.

By the arrangements that a fixed f-number is provided by the annular light blocking portion 140, and a variable f-number is provided by the variable aperture opening 112, the imaging lens assembly module 10 can correspond to the shooting environments with the different amounts of incident light, and an imaging quality can be improved. Furthermore, by that the sidewall structure 121 extends along with the shape of the imaging lens assembly 11, the light blocking sheet set 110 of the variable aperture module 12 can be closer to the imaging lens assembly 11, thereby enhancing an allowance of optical design.

Furthermore, the light blocking sheet set 110 can be made of a plastic material, wherein the plastic material can be a polyethylene terephthalate (PET), and a surface of the light blocking sheet set 110 made of PET is coated with a light-blocking layer or treated with sandblasting and then coated with an anti-reflective layer, but the present disclosure is not limited thereto. Therefore, it is favorable for enhancing the production efficiency of the light blocking sheet set 110.

The variable aperture module 12 can further include a frame element 150, four rolling support elements 160, and a driving mechanism (reference number is omitted). The frame element 150 is coupled with the fixed element 120. The rolling support elements 160 are disposed between the movable element 130 and the frame element 150, so that the movable element 130 has a rotational degree of freedom along the circumferential direction. The driving mechanism is for driving the movable element 130 to rotate along the circumferential direction and then driving the light blocking sheet set 110 to adjust the aperture size of the variable aperture opening 112. Therefore, an assembling structure of the variable aperture module 12 can be more stable by the arrangement of the frame element 150, so that the yield rate of products can be increased. Furthermore, a radial positioning and an axial supporting between the movable element 130 and the frame element 150 can be more precise by the arrangement of the rolling support elements 160, so that the working quality of the variable aperture module 12 can be enhanced.

Furthermore, the variable aperture module 12 can further include a cover 181 and two spacers 182, 183. The cover 181 is for accommodating the light blocking sheet set 110, the fixed element 120, the movable element 130, the annular light blocking portion 140, the frame element 150, the rolling support elements 160, the driving mechanism, and the spacers 182, 183, wherein the light blocking sheet set 110 is disposed between the spacers 182, 183.

The driving mechanism includes two coils 171 and two magnets 172, wherein the magnets 172 are disposed along the circumferential direction, and the magnets 172 are disposed corresponding to the coils 171. Therefore, the arrangement with better driving efficiency can be obtained.

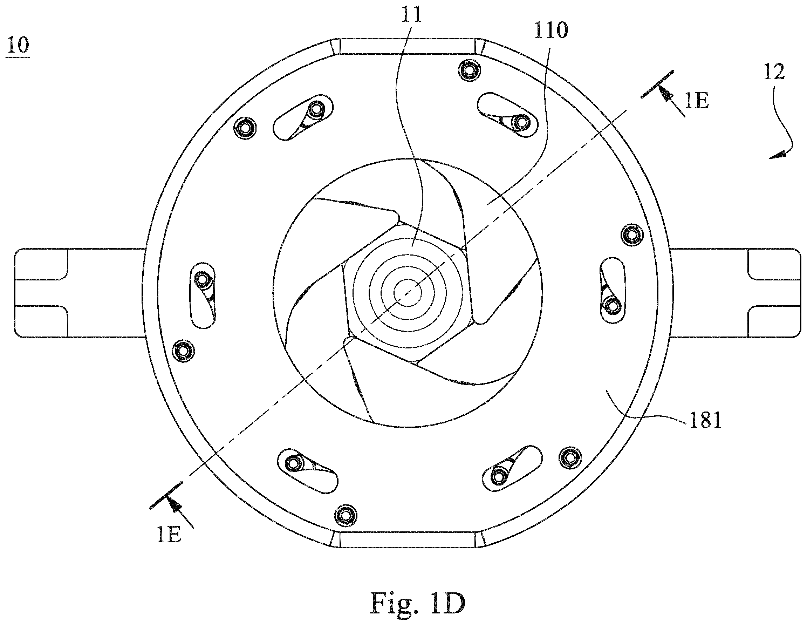

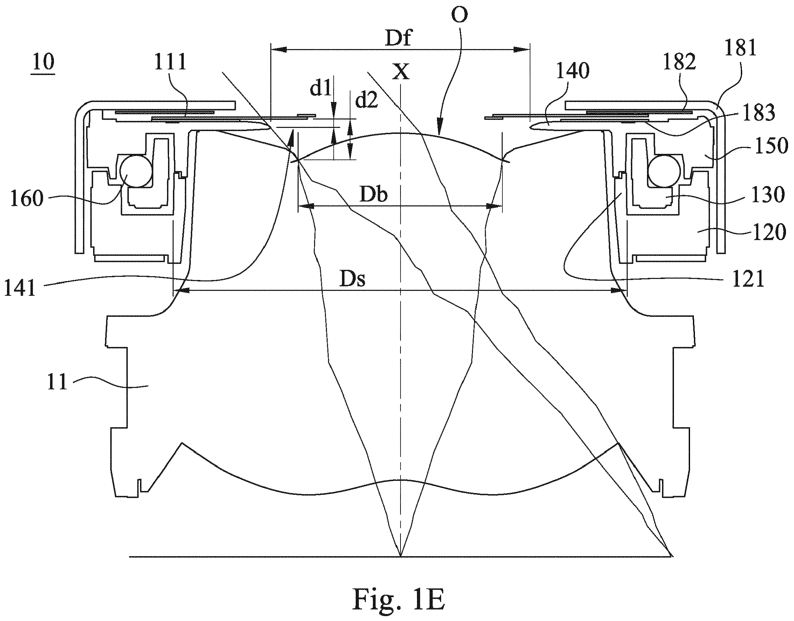

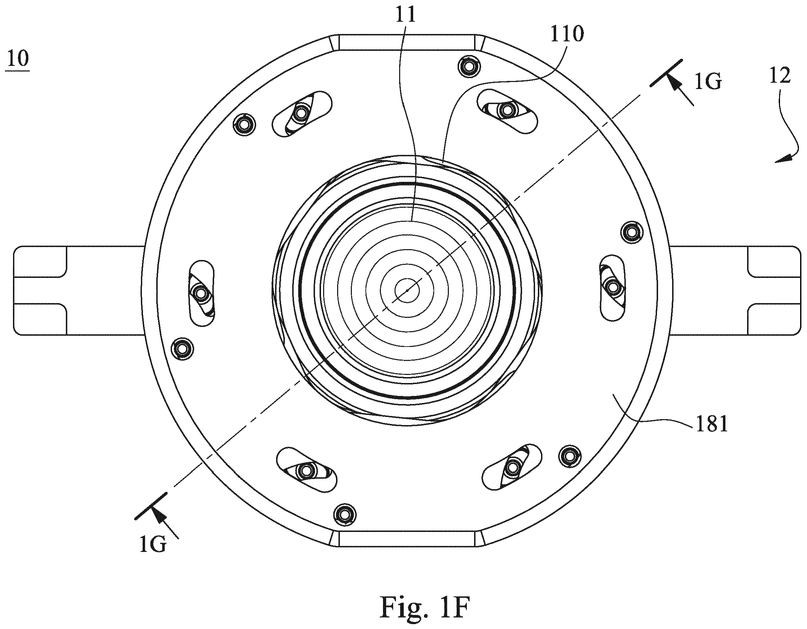

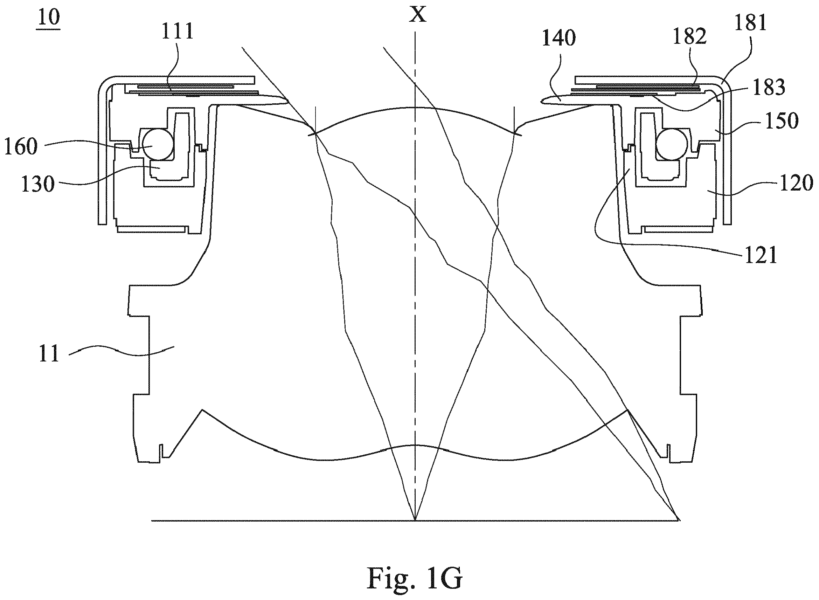

Fig. 1D is a state schematic view of the variable aperture module 12 with a minimum aperture opening according to the 1st embodiment of Fig. 1A. Fig. 1E is a cross-sectional view along Line 1E-1E of the imaging lens assembly module 10 according to the 1st embodiment of Fig. 1D. Fig. 1F is a state schematic view of the variable aperture module 12 with a maximum aperture opening according to the 1st example of the 1st embodiment of Fig. 1A. Fig. 1G is a cross-sectional view along Line 1G-1G of the imaging lens assembly module 10 according to the 1st example of the 1st embodiment of Fig. 1F. As shown in Fig. 1D to Fig. 1G, the annular light blocking portion 140 is disposed on the frame element 150, wherein the annular light blocking portion 140 can be integrally formed by a plastic injection method, but the present disclosure is not limited thereto. Therefore, the fixed f-number can be defined by the frame element 150, thereby enhancing the allowance of optical design.

As shown in Fig. 1E and Fig. 1G, when the annular light blocking portion 140 is observed from a cross-section, the annular light blocking portion 140 gradually shrinks and intersects in a direction close to the optical axis X so as to present a pencil tip-shaped, but the present disclosure is not limited thereto.

The frame element 150 is physically contacted with the imaging lens assembly 11. Therefore, the variable aperture module 12 abuts the imaging lens assembly 11, and the assemble stability of the imaging lens assembly module 10 can be enhanced.

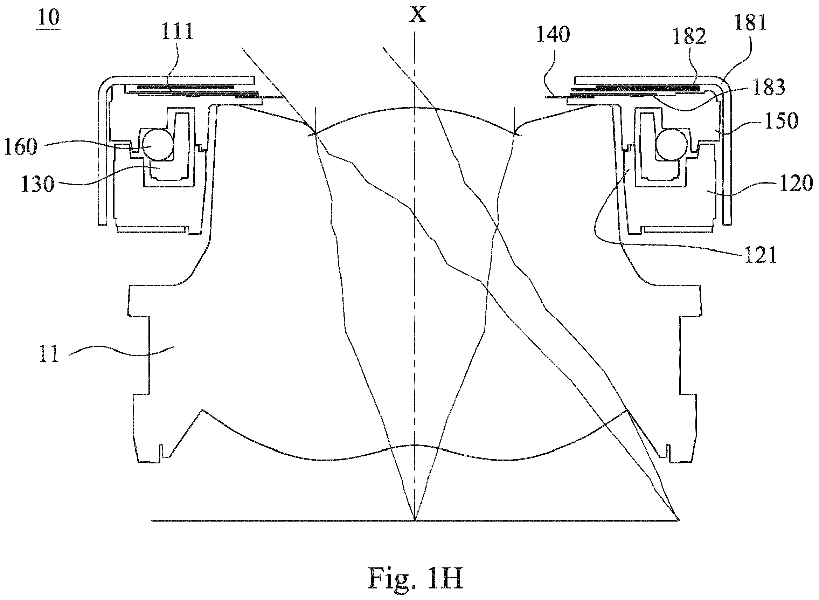

Fig. 1H is a cross-sectional view of the imaging lens assembly module 10 according to the 2nd example of the 1st embodiment of Fig. 1F. As shown in Fig. 1H, the annular light blocking portion 140 is disposed on the frame element 150, and the annular light blocking portion 140 can be correspondingly assembled with the light blocking sheets 111, but the present disclosure is not limited thereto.

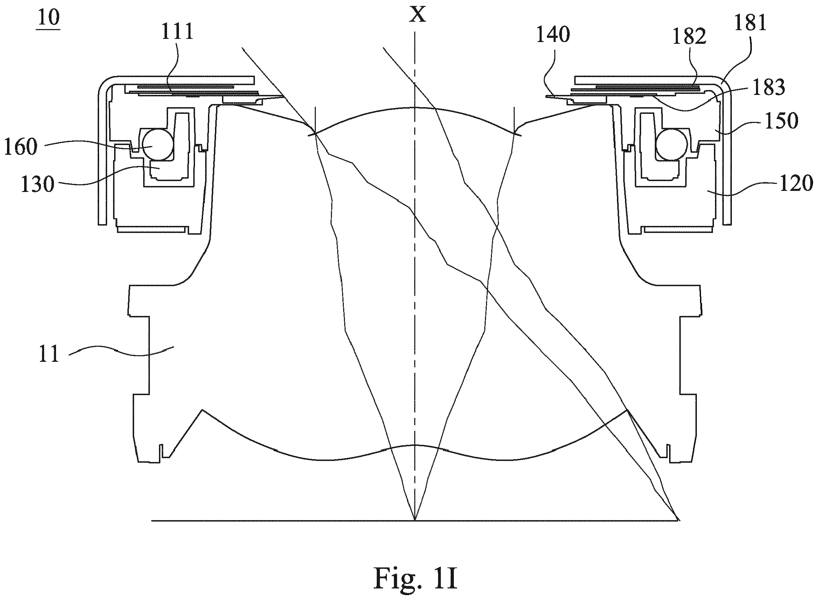

Fig. 1I is a cross-sectional view of the imaging lens assembly module 10 according to the 3rd example of the 1st embodiment of Fig. 1F. As shown in Fig. 1I, the annular light blocking portion 140 is disposed on the frame element 150, and the annular light blocking portion 140 can be made by embedding with a metal spacer and then formed by an insert molding method, but the present disclosure is not limited thereto.

As shown in Fig. 1E, when a focal length of the image lens assembly 11 is EFL, a diameter of the fixed aperture opening 141 is Df, a maximum outer diameter of the sidewall structure 121 of the fixed element 120 is Ds, a shortest distance between the light blocking sheet set 110 and the fixed aperture opening 141 along a direction parallel to the optical axis X is d1, a shortest distance between the light blocking sheet set 110 and a minimum aperture O of the imaging lens assembly 11 along the direction parallel to the optical axis X is d2, and a diameter of the minimum aperture O of the imaging lens assembly 11 is Db, the parameters satisfy the conditions shown in Table 1.

| Table 1 | | | |
|---|---|---|---|
| EFL (mm) | 5.69 | d2 (mm) | 0.75 |
| Df (mm) | 4.8 | Db (mm) | 3.78 |
| EFL/Df | 1.19 | Db/Df | 0.79 |
| d1 (mm) | 0.16 | Ds (mm) | 8.4 |

In the 1st embodiment, a fixed f-number of the imaging lens assembly 11 can be defined by the fixed aperture opening 141. When the fixed aperture opening 141 is an aperture stop of the imaging lens assembly 11, and the fixed f-number is F#, the following condition is satisfied: F# = EFL/Df.

<2nd embodiment>

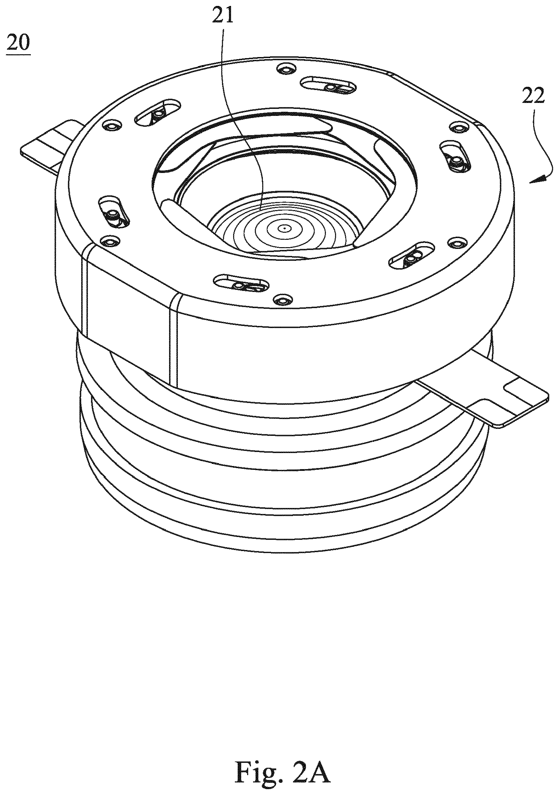

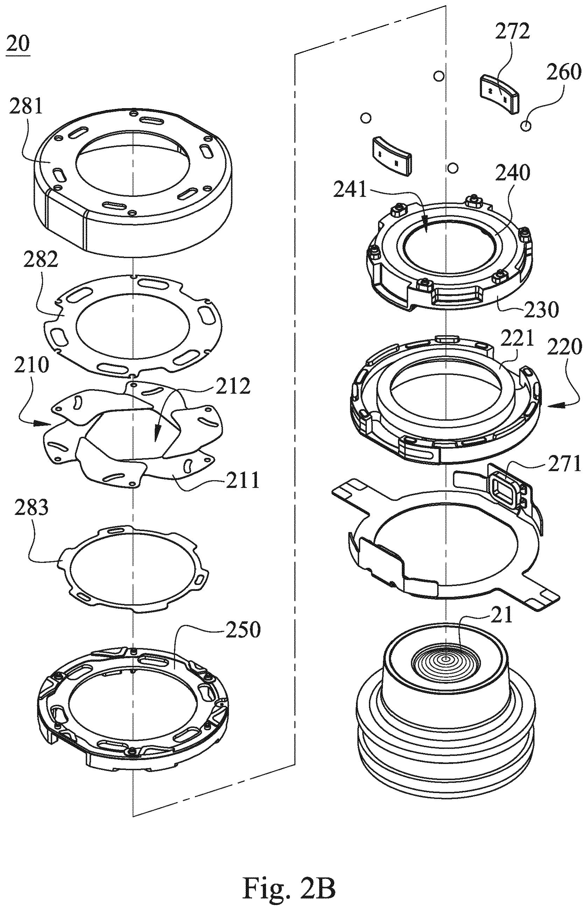

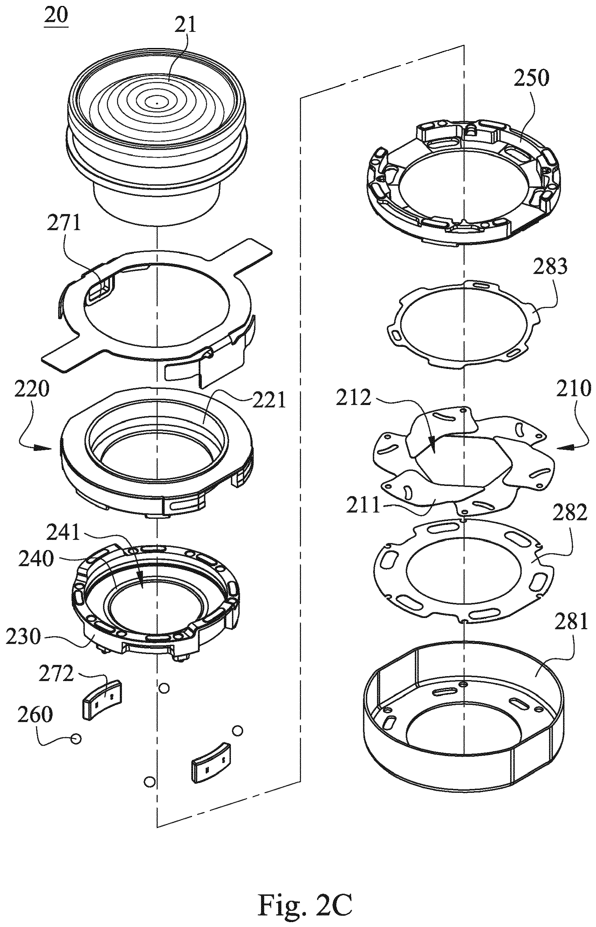

Fig. 2A is a three-dimensional schematic view of an imaging lens assembly module 20 according to the 2nd embodiment of the present disclosure. Fig. 2B is an exploded view of the imaging lens assembly module 20 according to the 2nd embodiment of Fig. 2A. Fig. 2C is another exploded view of the imaging lens assembly module 20 according to the 2nd embodiment of Fig. 2A. As shown in Fig. 2A to Fig. 2C, the imaging lens assembly module 20 includes an imaging lens assembly 21 and a variable aperture module 22, wherein the imaging lens assembly 21 has an optical axis X. The variable aperture module 22 is disposed on an object side of the imaging lens assembly 21, the optical axis X passes through a center of the variable aperture module 22, and the variable aperture module 22 is coupled with the imaging lens assembly 21.

The variable aperture module 22 includes a light blocking sheet set 210, a fixed element 220, a movable element 230, and an annular light blocking portion 240. The light blocking sheet set 210 includes six light blocking sheets 211, wherein the six light blocking sheets 211 are mutually stacked along a circumferential direction surrounding the optical axis X to form a variable aperture opening 212. The fixed element 220 is indirectly or directly connected to the light blocking sheet set 210, and the fixed element 220 has a sidewall structure 221. The sidewall structure 221 of the fixed element 220 extends from an image side to the object side of the imaging lens assembly 21. The movable element 230 is connected to the light blocking sheet set 210, wherein the movable element 230 drives the light blocking sheet set 210 to move relative to the fixed element 220, so that an aperture size of the variable aperture opening 212 is variable. The annular light blocking portion 240 extends toward the optical axis X along a direction perpendicular to the optical axis X, wherein the annular light blocking portion 240 surrounds the optical axis X to form a fixed aperture opening 241.

By the arrangements that a fixed f-number is provided by the annular light blocking portion 240, and a variable f-number is provided by the variable aperture opening 212, the imaging lens assembly module 20 can correspond to the shooting environments with the different amounts of incident light, and an imaging quality can be improved. Furthermore, by that the sidewall structure 221 extends along with the shape of the imaging lens assembly 21, the light blocking sheet set 210 of the variable aperture module 22 can be closer to the imaging lens assembly 21, thereby enhancing an allowance of optical design.

The variable aperture module 22 can further include a frame element 250, four rolling support elements 260, and a driving mechanism (reference number is omitted). The frame element 250 is coupled with the fixed element 220. The rolling support elements 260 are disposed between the movable element 230 and the frame element 250, so that the movable element 230 has a rotational degree of freedom along the circumferential direction. The driving mechanism is for driving the movable element 230 to rotate along the circumferential direction and then driving the light blocking sheet set 210 to adjust the aperture size of the variable aperture opening 212. Therefore, an assembling structure of the variable aperture module 22 can be more stable by the arrangement of the frame element 250, so that the yield rate of products can be increased. Furthermore, a radial positioning and an axial supporting between the movable element 230 and the frame element 250 can be more precise by the arrangement of the rolling support elements 260, so that the working quality of the variable aperture module 22 can be enhanced.

Furthermore, the variable aperture module 22 can further include a cover 281 and two spacers 282, 283. The cover 281 is for accommodating the light blocking sheet set 210, the fixed element 220, the movable element 230, the annular light blocking portion 240, the frame element 250, the rolling support elements 260, the driving mechanism, and the spacers 282, 283, wherein the light blocking sheet set 210 is disposed between the spacers 282, 283.

The driving mechanism includes two coils 271 and two magnets 272, wherein the magnets 272 are disposed along the circumferential direction, and the magnets 272 are disposed corresponding to the coils 271. Therefore, the arrangement with better driving efficiency can be obtained.

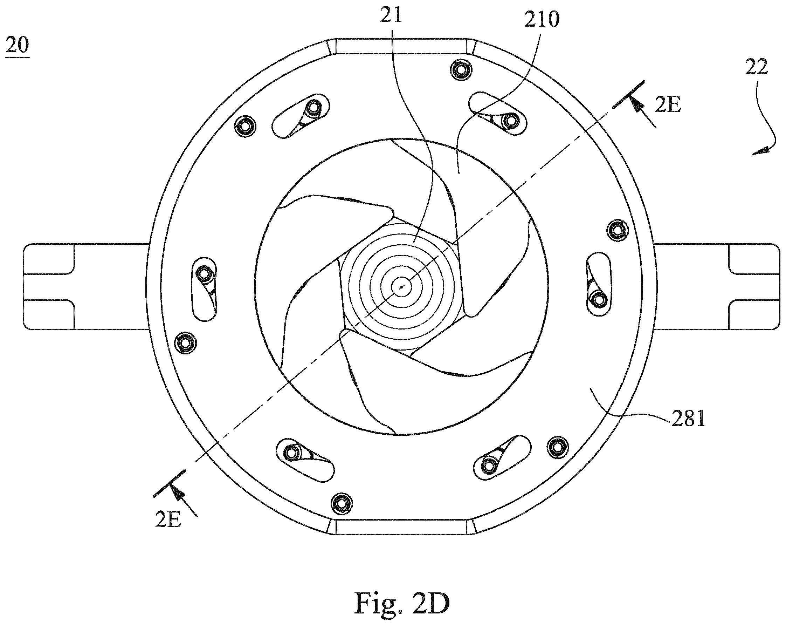

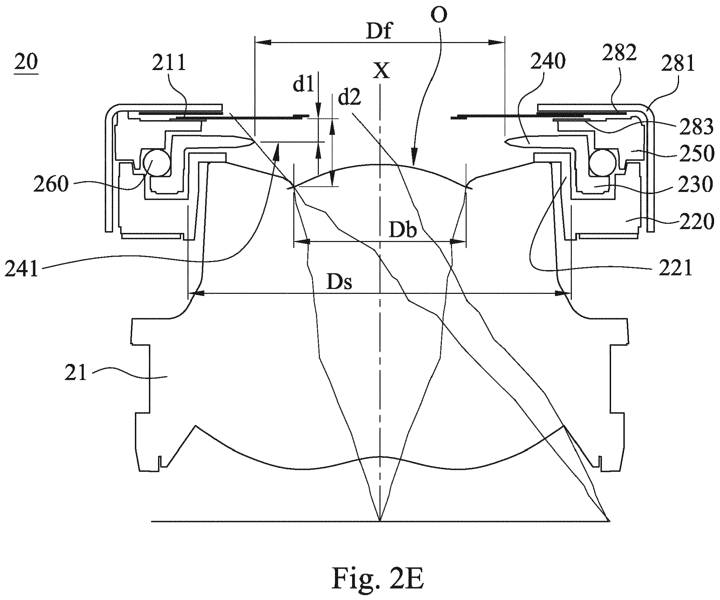

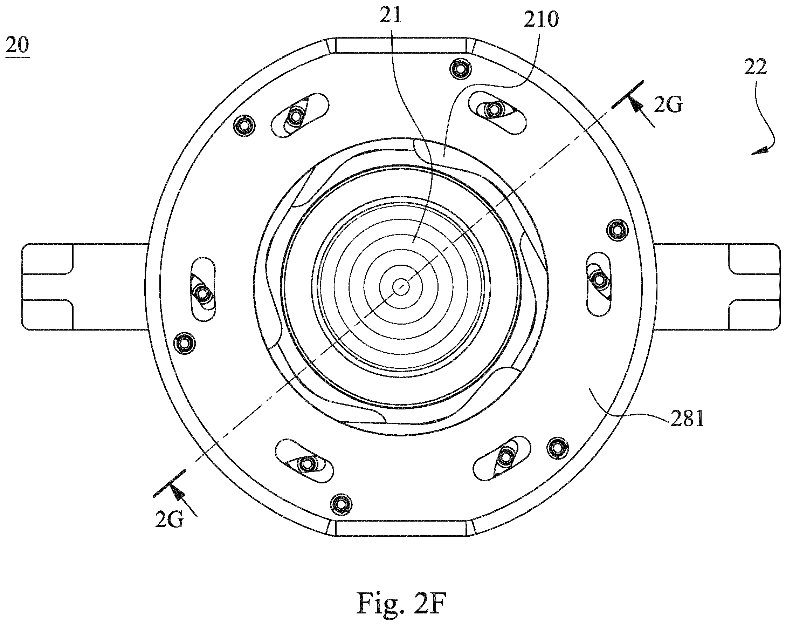

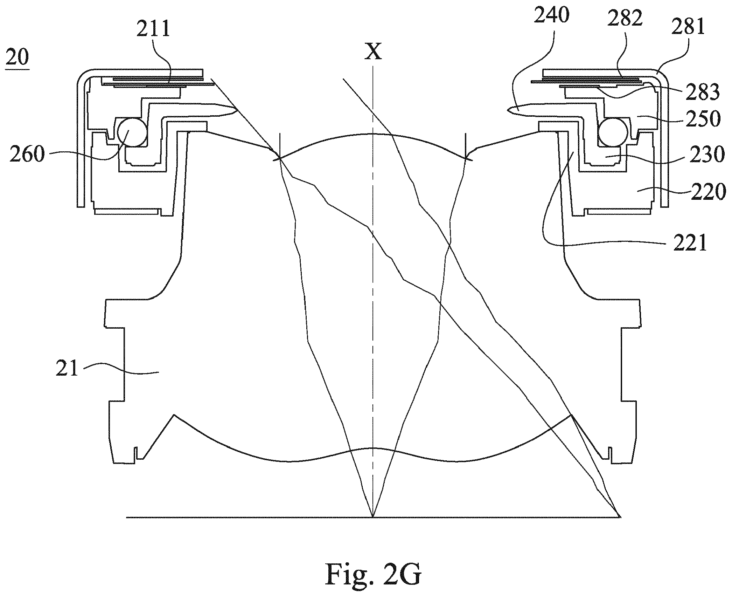

Fig. 2D is a state schematic view of the variable aperture module 22 with a minimum aperture opening according to the 2nd embodiment of Fig. 2A. Fig. 2E is a cross-sectional view along Line 2E-2E of the imaging lens assembly module 20 according to the 2nd embodiment of Fig. 2D. Fig. 2F is a state schematic view of the variable aperture module 22 with a maximum aperture opening according to the 1st example of the 2nd embodiment of Fig. 2A. Fig. 2G is a cross-sectional view along Line 2G-2G of the imaging lens assembly module 20 according to the 1st example of the 2nd embodiment of Fig. 2F. As shown in Fig. 2D to Fig. 2G, the annular light blocking portion 240 is disposed on the movable element 230, wherein the annular light blocking portion 240 can be integrally formed by a plastic injection method, but the present disclosure is not limited thereto. Therefore, the fixed f-number can be defined by the movable element 230, thereby enhancing the allowance of optical design.

As shown in Fig. 2E and Fig. 2G, when the annular light blocking portion 240 is observed from a cross-section, the annular light blocking portion 240 gradually shrinks and intersects in a direction close to the optical axis X so as to present a pencil tip-shaped, but the present disclosure is not limited thereto.

The fixed element 220 is physically contacted with the imaging lens assembly 21. Therefore, the variable aperture module 22 abuts the imaging lens assembly 21, and the assemble stability of the imaging lens assembly module 20 can be enhanced. Furthermore, the sidewall structure 221 of the fixed element 220 is physically contacted with the imaging lens assembly 21.

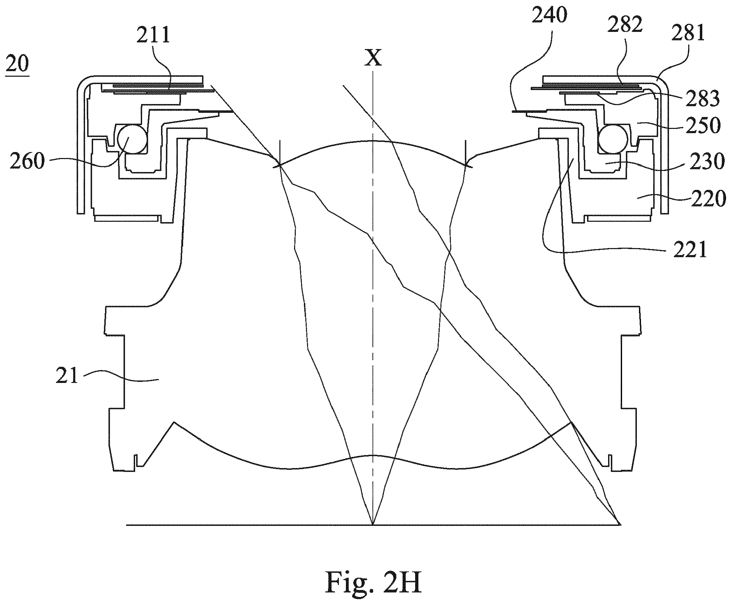

Fig. 2H is a cross-sectional view of the imaging lens assembly module 20 according to the 2nd example of the 2nd embodiment of Fig. 2F. As shown in Fig. 2H, the annular light blocking portion 240 is disposed on the movable element 230, and the annular light blocking portion 240 can be correspondingly assembled with the light blocking sheets 211, but the present disclosure is not limited thereto.

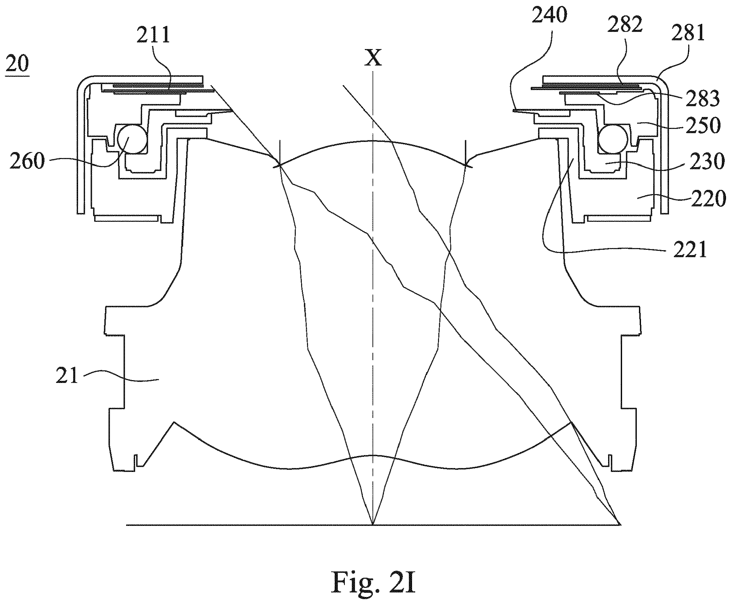

Fig. 2I is a cross-sectional view of the imaging lens assembly module 20 according to the 3rd example of the 2nd embodiment of Fig. 2F. As shown in Fig. 2I, the annular light blocking portion 240 is disposed on the movable element 230, and the annular light blocking portion 240 can be made by embedding with a metal spacer and then formed by an insert molding method, but the present disclosure is not limited thereto.

As shown in Fig. 2E, when a focal length of the image lens assembly 21 is EFL, a diameter of the fixed aperture opening 241 is Df, a maximum outer diameter of the sidewall structure 221 of the fixed element 220 is Ds, a shortest distance between the light blocking sheet set 210 and the fixed aperture opening 241 along a direction parallel to the optical axis X is d1, a shortest distance between the light blocking sheet set 210 and a minimum aperture O of the imaging lens assembly 21 along the direction parallel to the optical axis X is d2, and a diameter of the minimum aperture O of the imaging lens assembly 21 is Db, the parameters satisfy the conditions shown in Table 2.

| Table 2 | | | |
|---|---|---|---|
| EFL (mm) | 5.69 | d2 (mm) | 1.49 |
| Df (mm) | 5.48 | Db (mm) | 3.78 |
| EFL/Df | 1.04 | Db/Df | 0.69 |
| d1 (mm) | 0.51 | Ds (mm) | 8.4 |

In the 2nd embodiment, a fixed f-number of the imaging lens assembly 21 can be defined by the fixed aperture opening 241. When the fixed aperture opening 241 is an aperture stop of the imaging lens assembly 21, and the fixed f-number is F#, the following condition is satisfied: F# = EFL/Df.

<3rd embodiment>

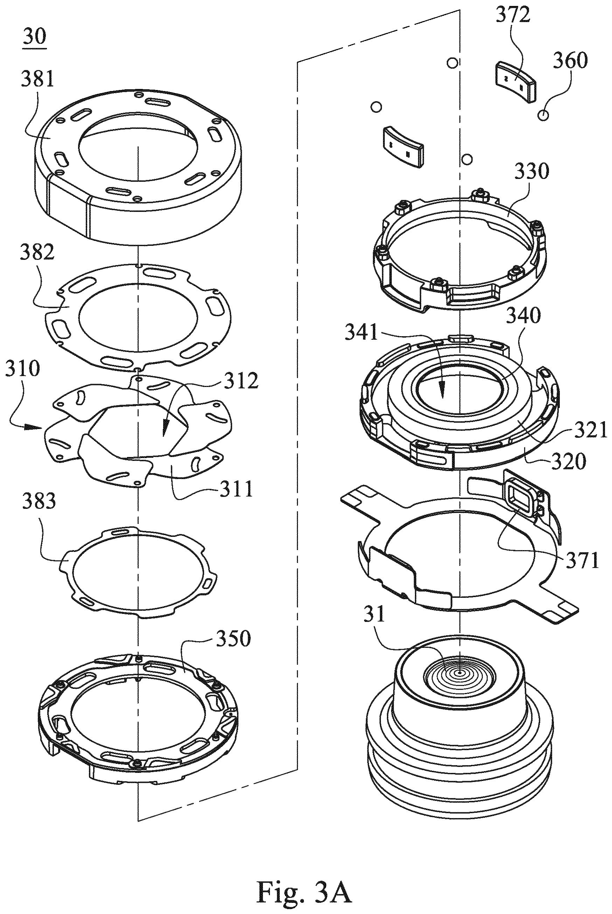

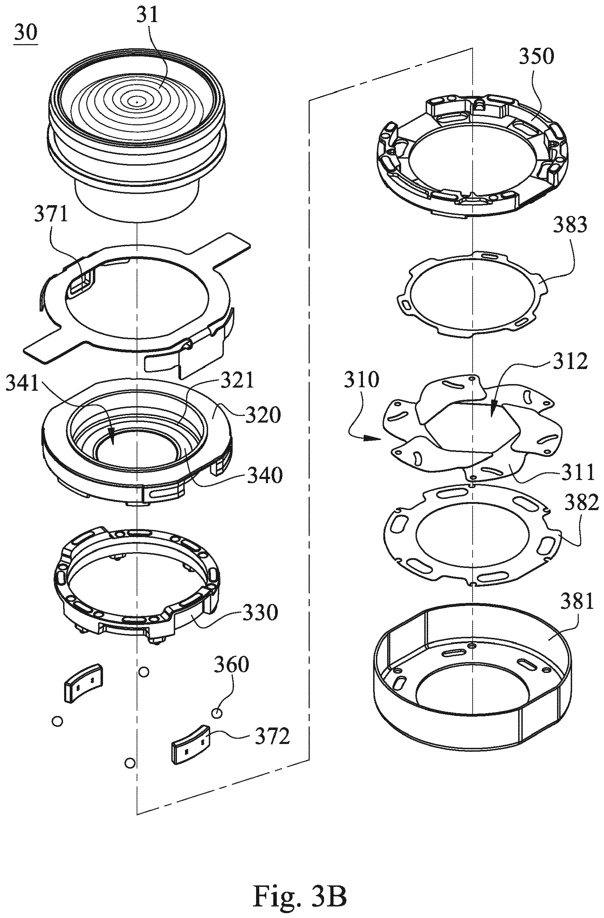

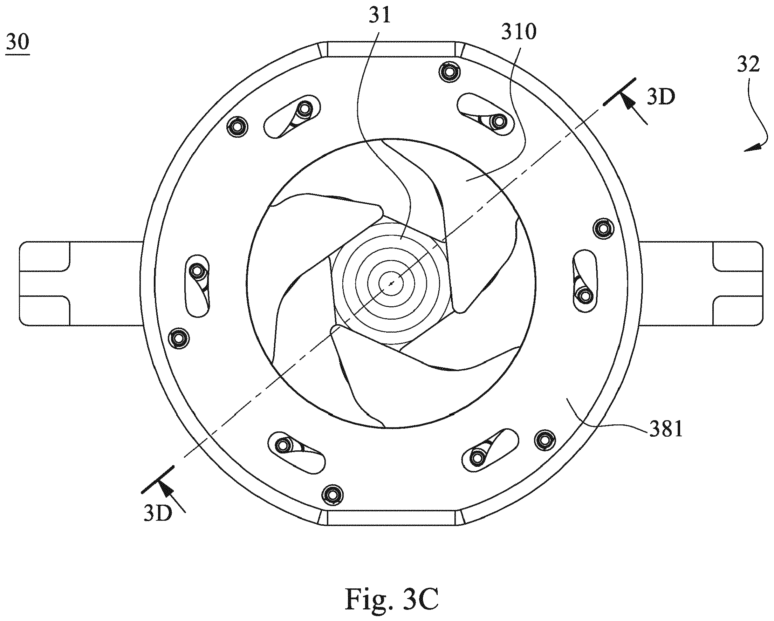

Fig. 3A is an exploded view of an imaging lens assembly module 30 according to the 3rd embodiment of the present disclosure. Fig. 3B is another exploded view of the imaging lens assembly module 30 according to the 3rd embodiment of Fig. 3A. As shown in Fig. 3A and Fig. 3B, the imaging lens assembly module 30 includes an imaging lens assembly 31 and a variable aperture module 32 (reference number is labeled in Fig. 3C), wherein the imaging lens assembly 31 has an optical axis X. The variable aperture module 32 is disposed on an object side of the imaging lens assembly 31, the optical axis X passes through a center of the variable aperture module 32, and the variable aperture module 32 is coupled with the imaging lens assembly 31.

The variable aperture module 32 includes a light blocking sheet set 310, a fixed element 320, and a movable element 330. The light blocking sheet set 310 includes six light blocking sheets 311, wherein the six light blocking sheets 311 are mutually stacked along a circumferential direction surrounding the optical axis X to form a variable aperture opening 312. The fixed element 320 is indirectly or directly connected to the light blocking sheet set 310, and the fixed element 320 has a sidewall structure 321 and an annular light blocking portion 340, wherein the annular light blocking portion 340 extends toward the optical axis X along a direction perpendicular to the optical axis X, and the annular light blocking portion 340 surrounds the optical axis X to form a fixed aperture opening 341. The sidewall structure 321 of the fixed element 320 extends from an image side to the object side of the imaging lens assembly 31. The movable element 330 is connected to the light blocking sheet set 310, wherein the movable element 330 drives the light blocking sheet set 310 to move relative to the fixed element 320, so that an aperture size of the variable aperture opening 312 is variable.

By the arrangements that a fixed f-number is provided by the annular light blocking portion 340, and a variable f-number is provided by the variable aperture opening 312, the imaging lens assembly module 30 can correspond to the shooting environments with the different amounts of incident light, and an imaging quality can be improved. Furthermore, by that the sidewall structure 321 extends along with the shape of the imaging lens assembly 31, the light blocking sheet set 310 of the variable aperture module 32 can be closer to the imaging lens assembly 31, thereby enhancing an allowance of optical design.

The variable aperture module 32 can further include a frame element 350, a plurality of rolling support elements 360, and a driving mechanism (reference number is omitted). The frame element 350 is coupled with the fixed element 320. The rolling support elements 360 are disposed between the movable element 330 and the frame element 350, so that the movable element 330 has a rotational degree of freedom along the circumferential direction. The driving mechanism is for driving the movable element 330 to rotate along the circumferential direction and then driving the light blocking sheet set 310 to adjust the aperture size of the variable aperture opening 312. Therefore, an assembling structure of the variable aperture module 32 can be more stable by the arrangement of the frame element 350, so that the yield rate of products can be increased. Furthermore, a radial positioning and an axial supporting between the movable element 330 and the frame element 350 can be more precise by the arrangement of the rolling support elements 360, so that the working quality of the variable aperture module 32 can be enhanced.

Furthermore, the variable aperture module 32 can further include a cover 381 and two spacers 382, 383. The cover 381 is for accommodating the light blocking sheet set 310, the fixed element 320, the movable element 330, the annular light blocking portion 340, the frame element 350, the rolling support elements 360, the driving mechanism, and the spacers 382, 383, wherein the light blocking sheet set 310 is disposed between the spacers 382, 383.

The driving mechanism includes two coils 371 and two magnets 372, wherein the magnets 372 are disposed along the circumferential direction, and the magnets 372 are disposed corresponding to the coils 371. Therefore, the arrangement with better driving efficiency can be obtained.

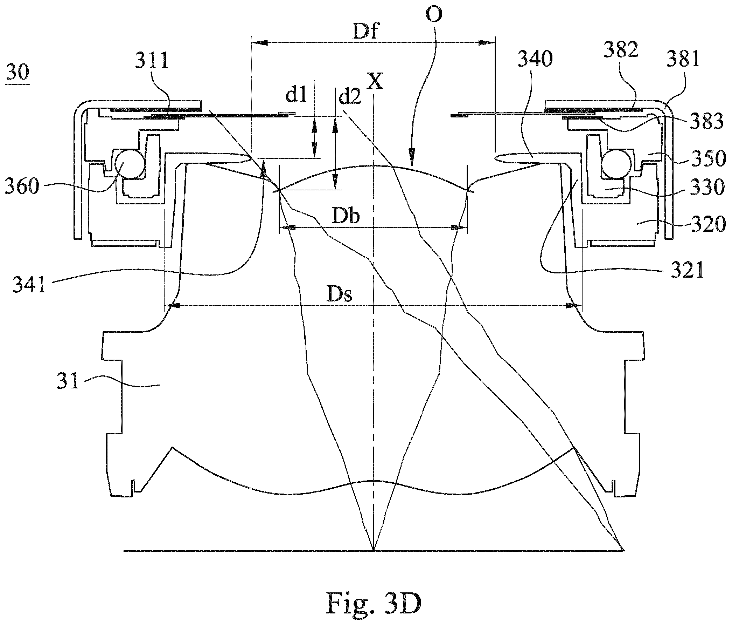

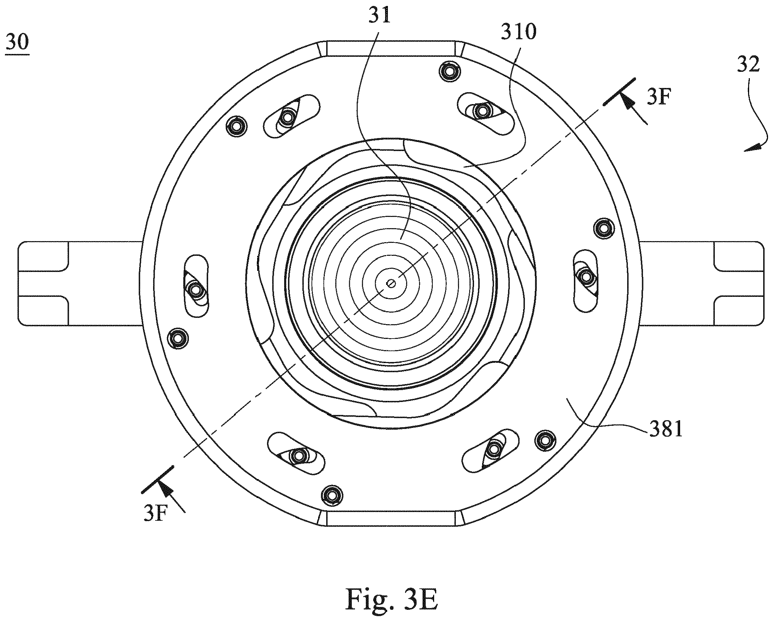

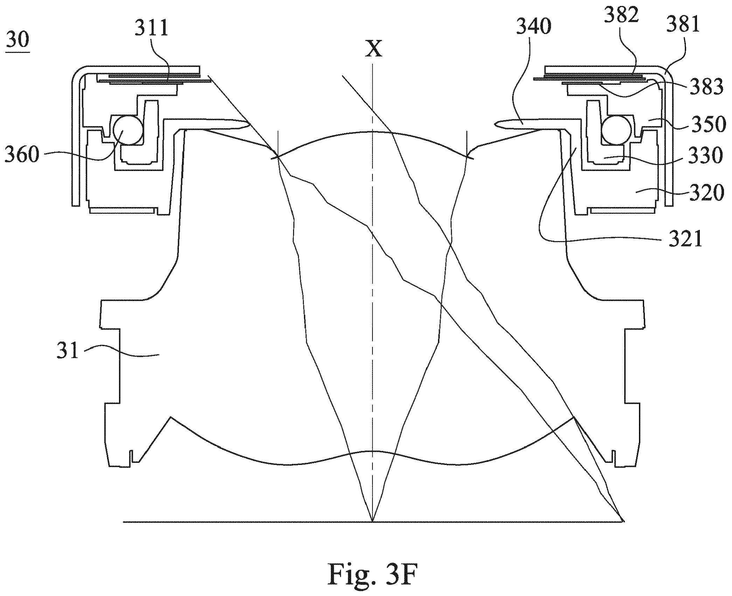

Fig. 3C is a state schematic view of the variable aperture module 32 with a minimum aperture opening according to the 3rd embodiment of Fig. 3A. Fig. 3D is a cross-sectional view along Line 3D-3D of the imaging lens assembly module 30 according to the 3rd embodiment of Fig. 3C. Fig. 3E is a state schematic view of the variable aperture module 32 with a maximum aperture opening according to the 1st example of the 3rd embodiment of Fig. 3A. Fig. 3F is a cross-sectional view along Line 3F-3F of the imaging lens assembly module 30 according to the 1st example of the 3rd embodiment of Fig. 3E. As shown in Fig. 3C to Fig. 3F, the sidewall structure 321 and the annular light blocking portion 340 are integrally formed. In detail, the annular light blocking portion 340 is connected to the sidewall structure 321 first, and then the sidewall structure 321 is connected to the fixed element 320, but the present disclosure is not limited thereto. Therefore, the fixed f-number can be defined by the fixed element 320, thereby enhancing the allowance of optical design.

As shown in Fig. 3D and Fig. 3F, when the annular light blocking portion 340 is observed from a cross-section, the annular light blocking portion 340 gradually shrinks and intersects in a direction close to the optical axis X so as to present a pencil tip-shaped, but the present disclosure is not limited thereto.

The fixed element 320 is physically contacted with the imaging lens assembly 31. Therefore, the variable aperture module 32 abuts the imaging lens assembly 31, and the assemble stability of the imaging lens assembly module 30 can be enhanced.

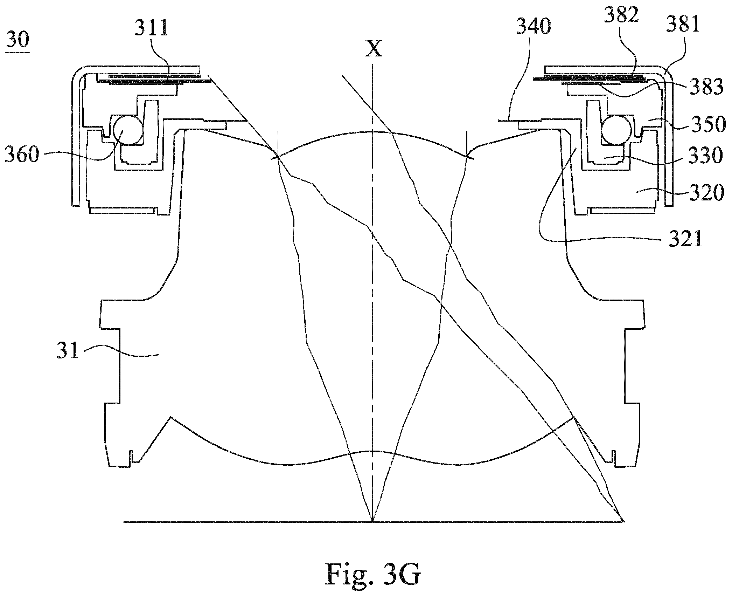

Fig. 3G is a cross-sectional view of the imaging lens assembly module 30 according to the 2nd example of the 3rd embodiment of Fig. 3E. As shown in Fig. 3G, the annular light blocking portion 340 is disposed on the sidewall structure 321 of the fixed element 320, and the annular light blocking portion 340 can be correspondingly assembled with the light blocking sheets 311, but the present disclosure is not limited thereto.

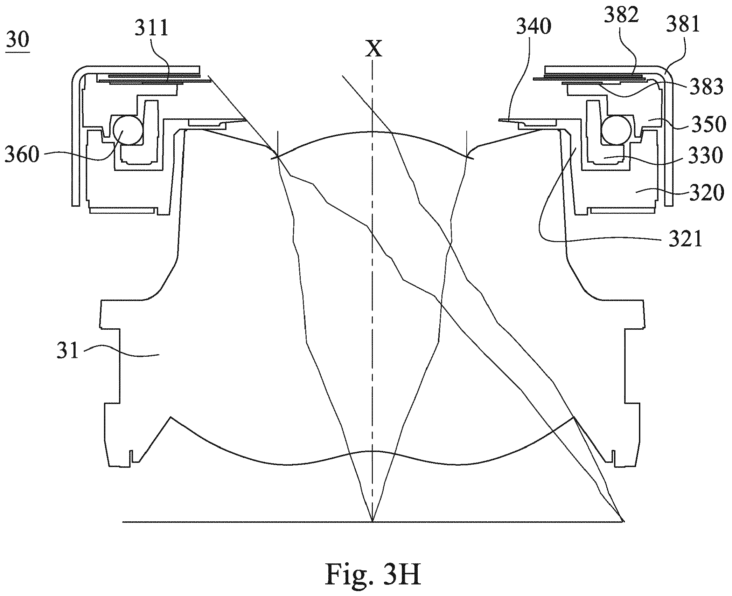

Fig. 3H is a cross-sectional view of the imaging lens assembly module 30 according to the 3rd example of the 3rd embodiment of Fig. 3E. As shown in Fig. 3H, the annular light blocking portion 340 is disposed on the sidewall structure 321 of the fixed element 320, and the annular light blocking portion 340 can be made by embedding with a metal spacer and then formed by an insert molding method, but the present disclosure is not limited thereto.

As shown in Fig. 3D, when a focal length of the image lens assembly 31 is EFL, a diameter of the fixed aperture opening 341 is Df, a maximum outer diameter of the sidewall structure 321 of the fixed element 320 is Ds, a shortest distance between the light blocking sheet set 310 and the fixed aperture opening 341 along a direction parallel to the optical axis X is d1, a shortest distance between the light blocking sheet set 310 and a minimum aperture O of the imaging lens assembly 31 along the direction parallel to the optical axis X is d2, and a diameter of the minimum aperture O of the imaging lens assembly 31 is Db, the parameters satisfy the conditions shown in Table 3.

| Table 3 | | | |
|---------|------|---------|------|
| EFL (mm) | 5.69 | d2 (mm) | 1.49 |
| Df (mm) | 4.89 | Db (mm) | 3.78 |
| EFL/Df | 1.16 | Db/Df | 0.77 |
| d1 (mm) | 0.85 | Ds (mm) | 8.4 |

In the 3rd embodiment, a fixed f-number of the imaging lens assembly 31 can be defined by the fixed aperture opening 341. When the fixed aperture opening 341 is an aperture stop of the imaging lens assembly 31, and the fixed f-number is F#, the following condition is satisfied: F# = EFL/Df.

<4th embodiment>

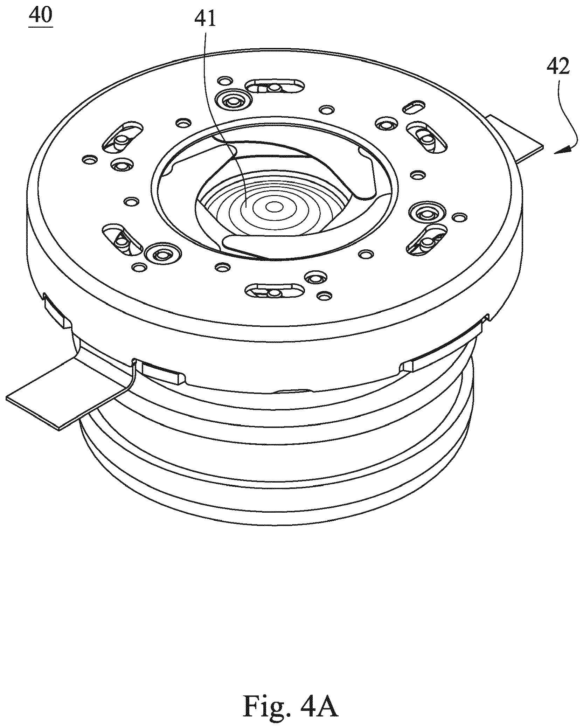

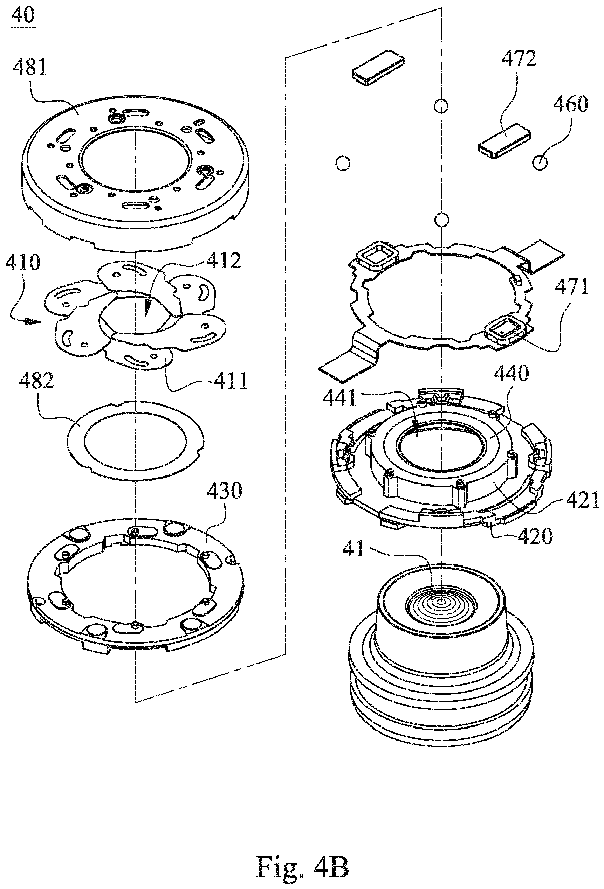

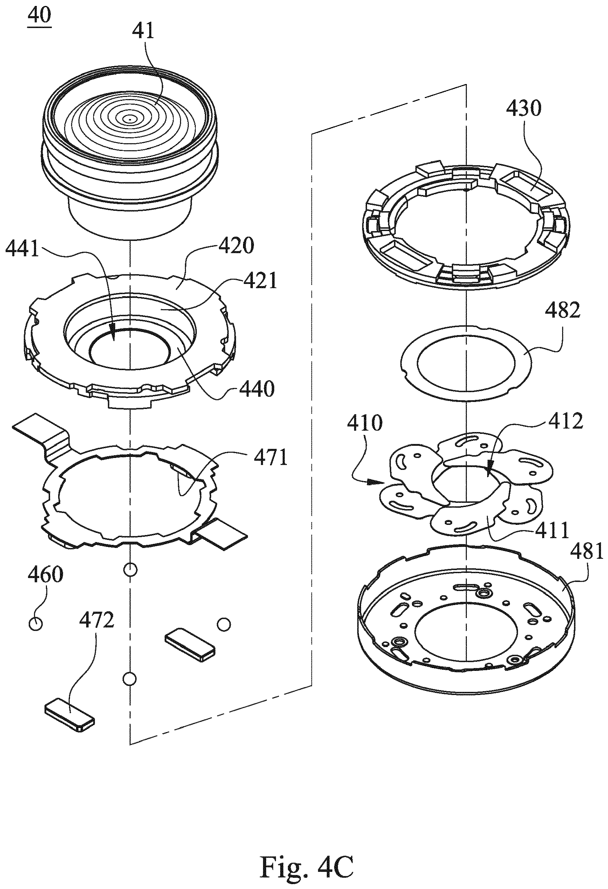

Fig. 4A is a three-dimensional schematic view of an imaging lens assembly module 40 according to the 4th embodiment of the present disclosure. Fig. 4B is an exploded view of the imaging lens assembly module 40 according to the 4th embodiment of Fig. 4A. Fig. 4C is another exploded view of the imaging lens assembly module 40 according to the 4th embodiment of Fig. 4A. As shown in Fig. 4A to Fig. 4C, the imaging lens assembly module 40 includes an imaging lens assembly 41 and a variable aperture module 42, wherein the imaging lens assembly 41 has an optical axis X. The variable aperture module 42 is disposed on an object side of the imaging lens assembly 41, the optical axis X passes through a center of the variable aperture module 42, and the variable aperture module 42 is coupled with the imaging lens assembly 41.

The variable aperture module 42 includes a light blocking sheet set 410, a fixed element 420, and a movable element 430. The light blocking sheet set 410 includes six light blocking sheets 411, wherein the six light blocking sheets 411 are mutually stacked along a circumferential direction surrounding the optical axis X to form a variable aperture opening 412. The fixed element 420 is indirectly or directly connected to the light blocking sheet set 410, and the fixed element 420 has a sidewall structure 421 and an annular light blocking portion 440, wherein the annular light blocking portion 440 extends toward the optical axis X along a direction perpendicular to the optical axis X, and the annular light blocking portion 440 surrounds the optical axis X to form a fixed aperture opening 441. The sidewall structure 421 of the fixed element 420 extends from an image side to the object side of the imaging lens assembly 41. The movable element 430 is connected to the light blocking sheet set 410, wherein the movable element 430 drives the light blocking sheet set 410 to move relative to the fixed element 420, so that an aperture size of the variable aperture opening 412 is variable.

By the arrangements that a fixed f-number is provided by the annular light blocking portion 440, and a variable f-number is provided by the variable aperture opening 412, the imaging lens assembly module 40 can correspond to the shooting environments with the different amounts of incident light, and an imaging quality can be improved. Furthermore, by that the sidewall structure 421 extends along with the shape of the imaging lens assembly 41, the light blocking sheet set 410 of the variable aperture module 42 can be closer to the imaging lens assembly 41, thereby enhancing an allowance of optical design.

The variable aperture module 42 can further include a plurality of rolling support elements 460 and a driving mechanism (reference number is omitted). The rolling support elements 460 are disposed between the fixed element 420 and the movable element 430, so that the movable element 430 has a rotational degree of freedom along the circumferential direction. The driving mechanism is for driving the movable element 430 to rotate along the circumferential direction and then driving the light blocking sheet set 410 to adjust the aperture size of the variable aperture opening 412. Therefore, a radial positioning and an axial supporting between the fixed element 420 and the movable element 430 can be more precise by the arrangement of the rolling support elements 460, so that the working quality of the variable aperture module 42 can be enhanced.

Furthermore, the variable aperture module 42 can further include a cover 481 and a spacer 482. The cover 481 is for accommodating the light blocking sheet set 410, the fixed element 420, the movable element 430, the annular light blocking portion 440, the rolling support elements 460, the driving mechanism, and the spacer 482, wherein the light blocking sheet set 410 is disposed between the cover 481 and the spacer 482.

The driving mechanism includes two coils 471 and two magnets 472, wherein the magnets 472 are disposed along the circumferential direction, and the magnets 472 are disposed corresponding to the coils 471. Therefore, the arrangement with better driving efficiency can be obtained.

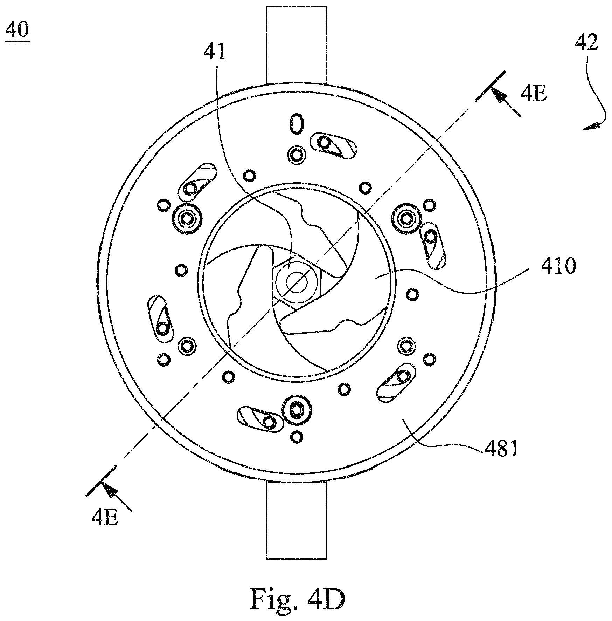

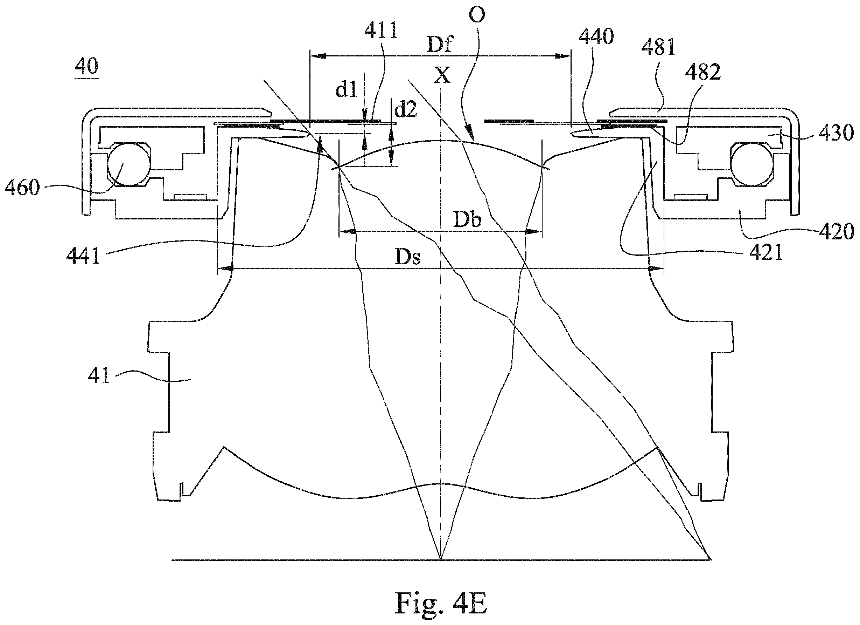

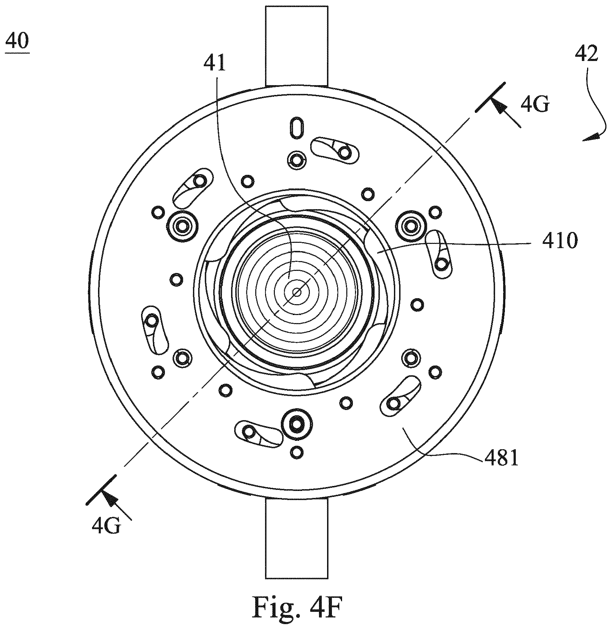

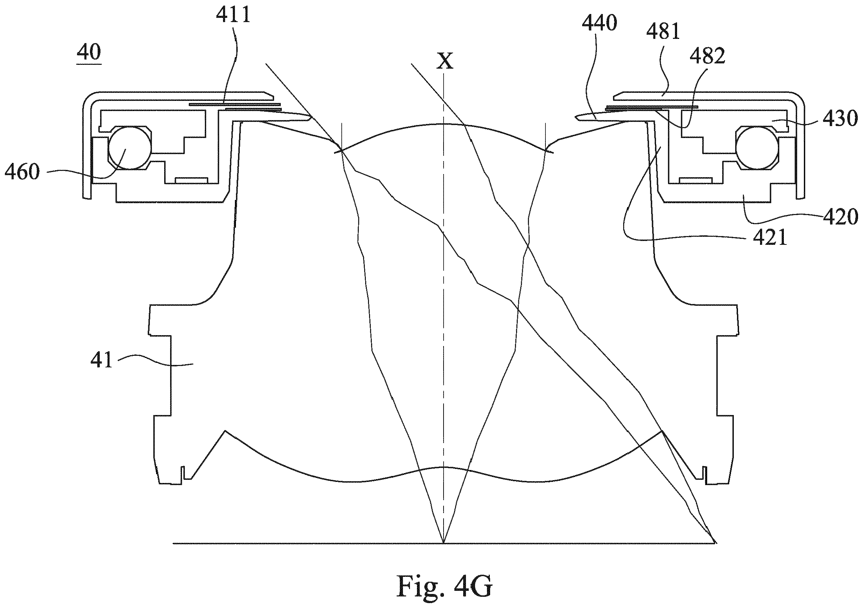

Fig. 4D is a state schematic view of the variable aperture module 42 with a minimum aperture opening according to the 4th embodiment of Fig. 4A. Fig. 4E is a cross-sectional view along Line 4E-4E of the imaging lens assembly module 40 according to the 4th embodiment of Fig. 4D. Fig. 4F is a state schematic view of the variable aperture module 42 with a maximum aperture opening according to the 1st example of the 4th embodiment of Fig. 4A. Fig. 4G is a cross-sectional view along Line 4G-4G of the imaging lens assembly module 40 according to the 1st example of the 4th embodiment of Fig. 4F. As shown in Fig. 4D to Fig. 4G, the sidewall structure 421 and the annular light blocking portion 440 are integrally formed. In detail, the annular light blocking portion 440 is connected to the sidewall structure 421 first, and then the sidewall structure 421 is connected to the fixed element 420, but the present disclosure is not limited thereto. Therefore, the fixed f-number can be defined by the fixed element 420, thereby enhancing the allowance of optical design.

As shown in Fig. 4E and Fig. 4G, when the annular light blocking portion 440 is observed from a cross-section, the annular light blocking portion 440 gradually shrinks and intersects in a direction close to the optical axis X so as to present a pencil tip-shaped, but the present disclosure is not limited thereto.

The fixed element 420 is physically contacted with the imaging lens assembly 41. Therefore, the variable aperture module 42 abuts the imaging lens assembly 41, and the assemble stability of the imaging lens assembly module 40 can be enhanced.

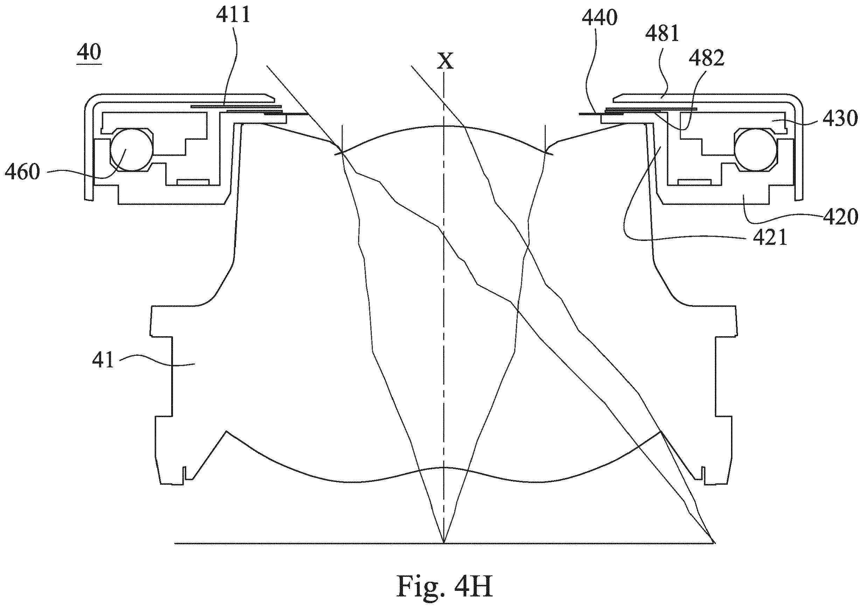

Fig. 4H is a cross-sectional view of the imaging lens assembly module 40 according to the 2nd example of the 4th embodiment of Fig. 4F. As shown in Fig. 4H, the annular light blocking portion 440 is disposed on the sidewall structure 421 of the fixed element 420, and the annular light blocking portion 440 can be correspondingly assembled with the light blocking sheets 411, but the present disclosure is not limited thereto.

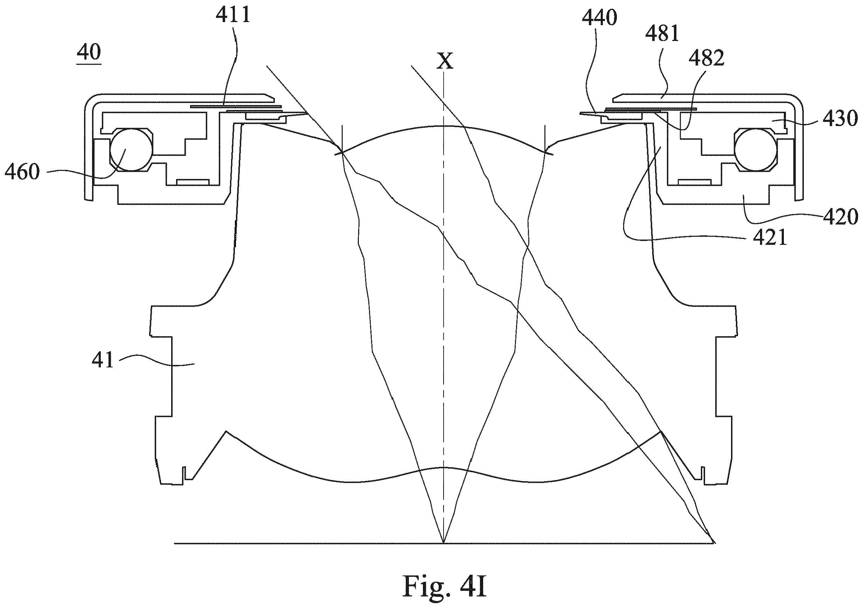

Fig. 4I is a cross-sectional view of the imaging lens assembly module 40 according to the 3rd example of the 4th embodiment of Fig. 4F. As shown in Fig. 4I, the annular light blocking portion 440 is disposed on the sidewall structure 421 of the fixed element 420, and the annular light blocking portion 440 can be made by embedding with a metal spacer and then formed by an insert molding method, but the present disclosure is not limited thereto.

As shown in Fig. 4E, when a focal length of the image lens assembly 41 is EFL, a diameter of the fixed aperture opening 441 is Df, a maximum outer diameter of the sidewall structure 421 of the fixed element 420 is Ds, a shortest distance between the light blocking sheet set 410 and the fixed aperture opening 441 along a direction parallel to the optical axis X is d1, a shortest distance between the light blocking sheet set 410 and a minimum aperture O of the imaging lens assembly 41 along the direction parallel to the optical axis X is d2, and a diameter of the minimum aperture O of the imaging lens assembly 41 is Db, the parameters satisfy the conditions shown in Table 4.

| Table 4 | | | |
|---|---|---|---|
| EFL (mm) | 5.69 | d2 (mm) | 0.79 |
| Df (mm) | 4.86 | Db (mm) | 3.78 |
| EFL/Df | 1.17 | Db/Df | 0.78 |
| d1 (mm) | 0.17 | Ds (mm) | 8.32 |

In the 4th embodiment, a fixed f-number of the imaging lens assembly 41 can be defined by the fixed aperture opening 441. When the fixed aperture opening 441 is an aperture stop of the imaging lens assembly 41, and the fixed f-number is F#, the following condition is satisfied: F# = EFL/Df.

<5th embodiment>

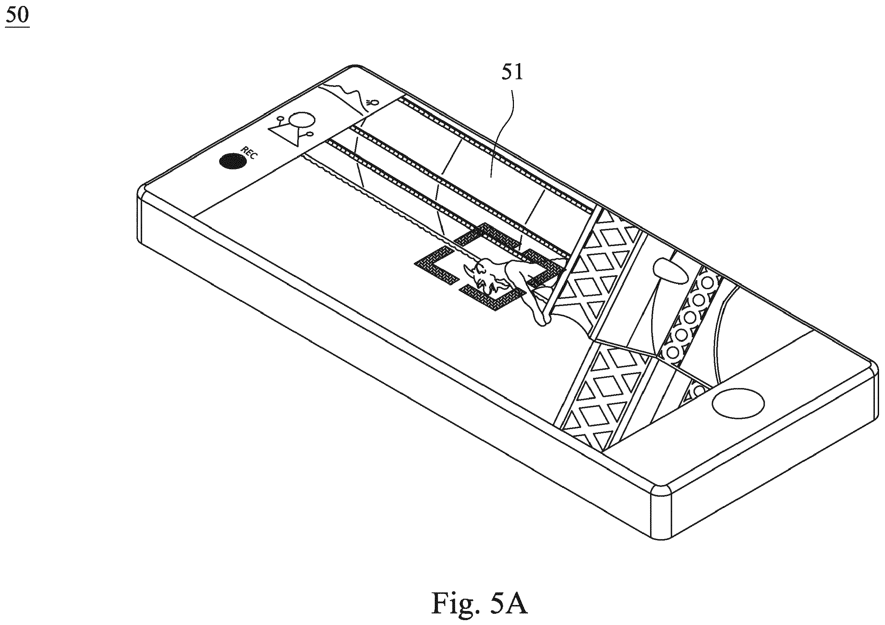

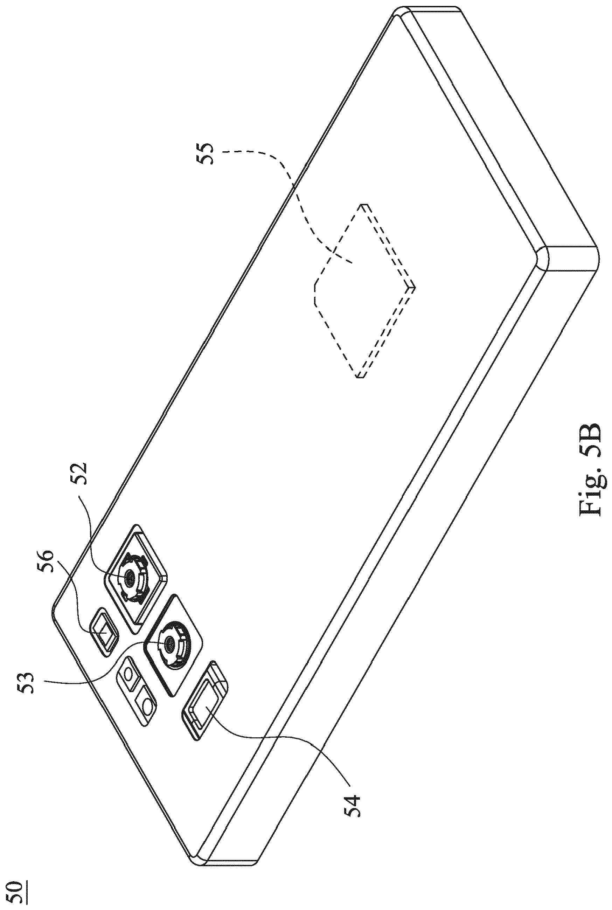

Fig. 5A is a schematic view of an electronic device 50 according to the 5th embodiment of the present disclosure. Fig. 5B is another schematic view of the electronic device 50 according to the 5th embodiment of Fig. 5A. As shown in Fig. 5A and Fig. 5B, the electronic device 50 is a smartphone. The electronic device 50 includes a camera module and a user interface 51, wherein the camera module includes an imaging lens assembly module (figure is omitted). In detail, the camera module is an ultra-wide-angle camera module 52, a high-pixel camera module 53, and a telephoto camera module 54, and the user interface 51 is a touch screen, but the present disclosure is not limited thereto. Further, the imaging lens assembly module can be the imaging lens assembly module according to any one of the 1st embodiment to the 4th embodiment, but the present disclosure is not limited thereto.

A user enters a shooting mode via the user interface 51, wherein the user interface 51 is used to display the screen, and the shooting angle can be manually adjusted to switch between different camera module. At this moment, an imaging light of the camera module is converged on an image sensor, and electronic signals associated with an image are output to an image signal processor (ISP) 55.

As shown in Fig. 5B, according to the camera specifications of the electronic device 50, the electronic device 50 can further include an optical anti-shake mechanism (figure is omitted). Further, the electronic device 50 can further include at least one focusing assisting module (figure is omitted) and at least one sensing component (figure is omitted). The focusing assisting module can be a flash module 56, an infrared distance measurement component, a laser focus module, etc. The flash module 56 is for compensating the color temperature. The sensing component can have functions for sensing physical momentum and kinetic energies, such as an accelerator, a gyroscope, and a Hall effect element, so as to sense shaking or jitters applied by hands of the user or external environments. Therefore, the autofocus function and the optical anti-shake mechanism of the camera module disposed on the electronic device 50 can function to obtain a great imaging quality and facilitate the electronic device 50 according to the present disclosure to have a capturing function with multiple modes, such as taking optimized selfies, high dynamic range (HDR) with a low light source, 4K resolution recording, etc. Furthermore, the user can visually see the captured image of the camera through the user interface 51 and manually operate the view finding range on the user interface 51 to achieve the auto focus function of what you see is what you get.

Furthermore, the camera module, the image sensor, the optical anti-shake mechanism, the sensing component and the focusing assisting module can be disposed on a flexible printed circuit board (FPC) (figure is omitted) and electrically connected to the image signal processor 55 and so on via a connector (figure is omitted) so as to operate a picturing process. Recent electronic devices such as smartphones have a trend towards thinness and lightness. The camera module and related elements are disposed on the flexible printed circuit board, and circuits are assembled into a main board of the electronic device by the connector. Hence, it can fulfill a mechanical design of a limited inner space of the electronic device and a requirement of a circuit layout and obtain a larger allowance, and it is also favorable for an autofocus function of the camera module obtaining a flexible control via a touch screen of the electronic device. In the 5th embodiment, the electronic device 50 can include a plurality of the sensing components and a plurality of the focusing assisting modules, and the sensing components and the focusing assisting modules are disposed on the flexible printed circuit board and another at least one flexible printed circuit board (figure is omitted) and electrically connected to the image signal processor 55 and so on via corresponding connectors so as to operate the picturing process. In other embodiments (figure is omitted), the sensing components and auxiliary optical elements can be disposed on the main board of the electronic device or a board of the other form according to the mechanical design and the requirement of the circuit layout.

Furthermore, the electronic device 50 can further include, but not be limited to, a display, a control unit, a storage unit, a random-access memory (RAM), a read-only memory (ROM), or the combination thereof.

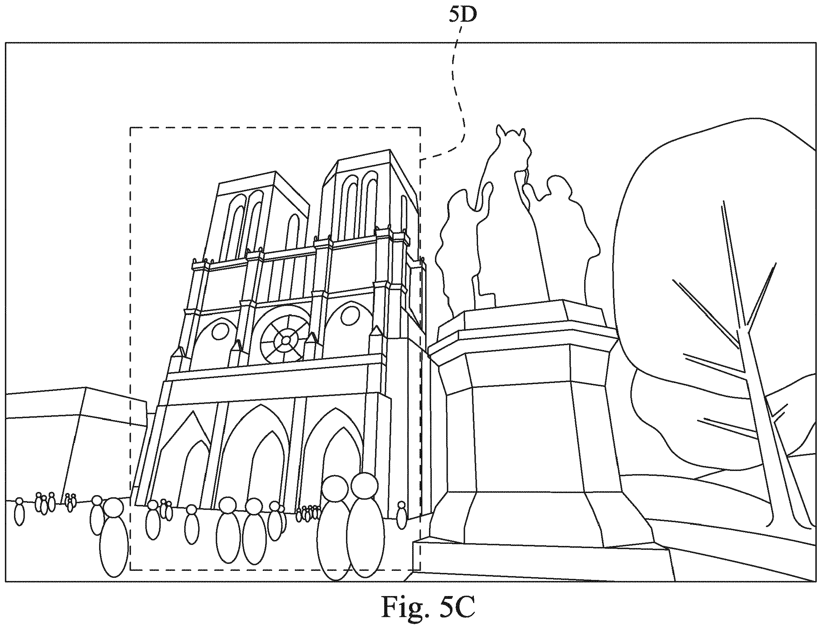

Fig. 5C is a schematic view of an image captured via the electronic device 50 according to the 5th embodiment of Fig. 5A. As shown in Fig. 5C, a larger ranged image can be captured via the ultra-wide-angle camera module 52, and the ultra-wide-angle camera module 52 has a function for containing more views.

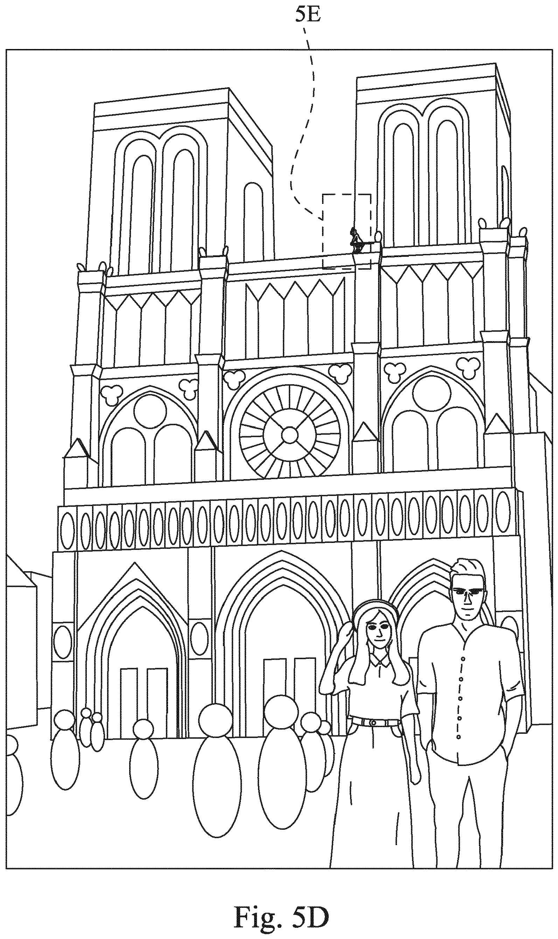

Fig. 5D is another schematic view of the image captured via the electronic device 50 according to the 5th embodiment of Fig. 5A. As shown in Fig. 5D, a certain ranged and high-pixel image can be captured via the high-pixel camera module 53, and the high-pixel camera module 53 has a function for high resolution and low distortion.

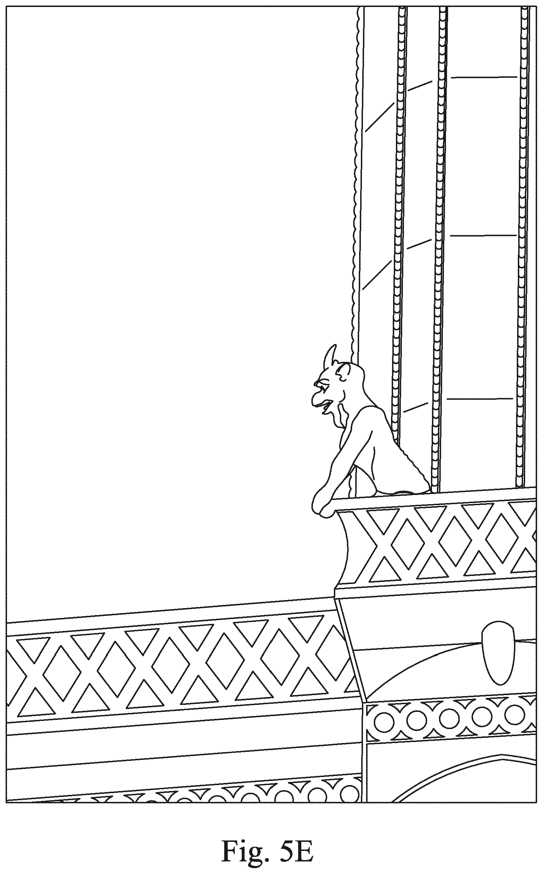

Fig. 5E is the other schematic view of the image captured via the electronic device 50 according to the 5th embodiment of Fig. 5A. As shown in Fig. 5E, a far image can be captured and enlarged to a high magnification via the telephoto camera module 54, and the telephoto camera module 54 has a function for a high magnification.

As shown in Fig. 5C to Fig. 5E, when an image is captured via the camera module having various focal lengths and processed via a technology of an image processing, a zoom function of the electronic device 50 can be achieved.

<6th embodiment>

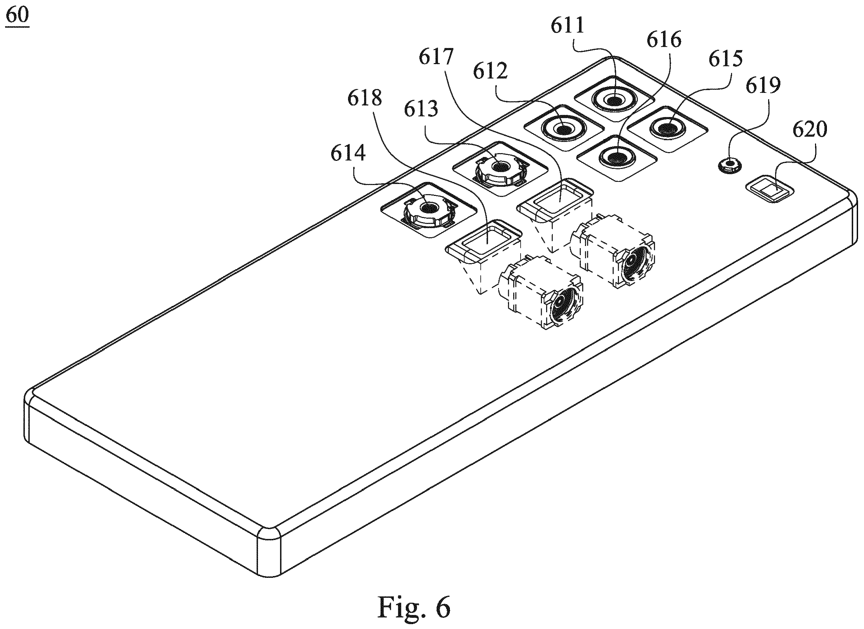

Fig. 6 is a schematic view of an electronic device 60 according to the 6th embodiment of the present disclosure. As shown in Fig. 6, the electronic device 60 is a smartphone. The electronic device 60 includes a camera module, wherein the camera module includes an imaging lens assembly module (figure is omitted). In detail, the camera module is two ultra-wide-angle camera modules 611, 612, two wide angle camera modules 613, 614, four telephoto camera modules 615, 616, 617, 618, and a Time-Of-Flight (TOF) module 619. The Time-Of-Flight module 619 can be other types of camera module, and the present disclosure is not limited thereto. Further, the imaging lens assembly module can be the imaging lens assembly module according to any one of the 1st embodiment to the 4th embodiment, but the present disclosure is not limited thereto.

Furthermore, the telephoto camera modules 617, 618 are configured to fold the light, but the present disclosure is not limited thereto.

According to the camera specifications of the electronic device 60, the electronic device 60 can further include an optical anti-shake mechanism (figure is omitted). Further, the electronic device 60 can further include at least one focusing assisting module (figure is omitted) and at least one sensing component (figure is omitted). The focusing assisting module can be a flash module 620, an infrared distance measurement component, a laser focus module, etc. The flash module 620 is for compensating the color temperature. The sensing component can have functions for sensing physical momentum and kinetic energies, such as an accelerator, a gyroscope, and a Hall effect element, so as to sense shaking or jitters applied by hands of a user or external environments. Therefore, the autofocus function and the optical anti-shake mechanism of the camera module disposed on the electronic device 60 can function to obtain a great imaging quality and facilitate the electronic device 60 according to the present disclosure to have a capturing function with multiple modes, such as taking optimized selfies, high dynamic range (HDR) with a low light source, 4K resolution recording, etc.

Further, all of other structures and dispositions according to the 6th embodiment are the same as the structures and the dispositions according to the 5th embodiment, and will not be described again herein.

## Claims

1. An imaging lens assembly module (10), **characterized in** comprising:

   an imaging lens assembly (11) having an optical axis (X); and
   a variable aperture module (12) disposed on an object side of the imaging lens assembly (11), the optical axis (X) passing through a center of the variable aperture module (12), and the variable aperture module (12) comprising:

   a light blocking sheet set (110) comprising at least two light blocking sheets (111), wherein the at least two light blocking sheets (111) are mutually stacked along a circumferential direction surrounding the optical axis (X) to form a variable aperture opening (112);
   a fixed element (120) indirectly or directly connected to the light blocking sheet set (110), and the fixed element (120) having a sidewall structure (121);
   a movable element (130) connected to the light blocking sheet set (110); and
   an annular light blocking portion (140) extending toward the optical axis (X) along a direction perpendicular to the optical axis (X), wherein the annular light blocking portion (140) surrounds the optical axis (X) to form a fixed aperture opening (141);

   wherein the sidewall structure (121) of the fixed element (120) extends from an image side to the object side of the imaging lens assembly (11);
   wherein the movable element (130) drives the light blocking sheet set (110) to move relative to the fixed element (120), so that an aperture size of the variable aperture opening (112) is variable;
   wherein a focal length of the image lens assembly (11) is EFL, a diameter of the fixed aperture opening (141) is Df, a maximum outer diameter of the sidewall structure (121) of the fixed element (120) is Ds, and the following conditions are satisfied:

   $$0.5 < EFL/Df < 5.2;$$

   and

   $$Df < Ds.$$

2. The imaging lens assembly module (10) of claim 1, wherein a shortest distance between the light blocking sheet set (110) and the fixed aperture opening (141) along a direction parallel to the optical axis (X) is d1, and the following condition is satisfied:

   $$0 \text{ mm} < d1 < 1.5 \text{ mm}.$$

3. The imaging lens assembly module (10) of claims 1 or 2, wherein the shortest distance between the light blocking sheet set (110) and the fixed aperture opening (141) along the direction parallel to the optical axis (X) is d1, and the following condition is satisfied:

   $$0.05 \text{ mm} < d1 < 1.2 \text{ mm}.$$

4. The imaging lens assembly module (10) of any one of claims 1 to 3, wherein the annular light blocking portion (140) is disposed on the movable element (130).

5. The imaging lens assembly module (10) of any one of claims 1 to 4, wherein the variable aperture module (12) further comprises:
   a frame element (150) coupled with the fixed element (120).

6. The imaging lens assembly module (10) of any one of claims 1 to 5, wherein the annular light blocking portion (140) is disposed on at least one of the movable element (130) and the frame element (150).

7. The imaging lens assembly module (10) of any one of claims 1 to 6, wherein the variable aperture module (12) further comprises:

a rolling support element (160) disposed between the movable element (130) and the frame element (150), and the movable element (130) has a rotational degree of freedom along the circumferential direction; and
a driving mechanism for driving the movable element (130) to rotate along the circumferential direction and then driving the light blocking sheet set (110) to adjust the aperture size of the variable aperture opening (112).

8. The imaging lens assembly module (10) of any one of claims 1 to 7, wherein the driving mechanism comprises:

at least one coil (171); and
at least one magnet (172) disposed along the circumferential direction, wherein the at least one magnet (172) is disposed corresponding to the at least one coil (171).

9. The imaging lens assembly module (10) of any one of claims 1 to 8, wherein the variable aperture module (12) is coupled with the imaging lens assembly (11).

10. The imaging lens assembly module (10) of any one of claims 1 to 9, wherein a frame element (150) of the variable aperture module (12) is physically contacted with the imaging lens assembly (11).

11. The imaging lens assembly module (10) of any one of claims 1 to 10, wherein the fixed element (120) is physically contacted with the imaging lens assembly (11).

12. The imaging lens assembly module (10) of any one of claims 1 to 11, wherein a shortest distance between the light blocking sheet set (110) and a minimum aperture (O) of the imaging lens assembly (11) along a direction parallel to the optical axis (X) is d2, and the following condition is satisfied:

$$0.1 \text{ mm} < d2 < 2.5 \text{ mm}.$$

13. The imaging lens assembly module (10) of any one of claims 1 to 12, wherein the shortest distance between the light blocking sheet set (110)and the minimum aperture (O) of the imaging lens assembly (11) along the direction parallel to the optical axis (X) is d2, and the following condition is satisfied:

$$0.15 \text{ mm} < d2 < 1.9 \text{ mm}.$$

14. The imaging lens assembly module (10) of any one of claims 1 to 13, wherein a diameter of the minimum aperture (O) of the imaging lens assembly (11) is Db, the diameter of the fixed aperture opening (141) is Df, and the following condition is satisfied:

$$0.2 < Db/Df < 1.$$

15. The imaging lens assembly module (10) of any one of claims 1 to 14, wherein the light blocking sheet set (110) is made of a plastic material.

16. A camera module, **characterized in** comprising:
the imaging lens assembly module (10) of any one of claims 1 to 15.

17. An electronic device (50), **characterized in** comprising:
the camera module of claim 16.

18. An imaging lens assembly module (10), **characterized in** comprising:

an imaging lens assembly (11) having an optical axis (X); and
a variable aperture module (12) disposed on an object side of the imaging lens assembly (11), the optical axis (X) passing through a center of the variable aperture module (12), and the variable aperture module (12) comprising:

a light blocking sheet set (110) comprising at least two light blocking sheets (111), wherein the at least two light blocking sheets (111) are mutually stacked along a circumferential direction surrounding the optical axis (X) to form a variable aperture opening (112);
a fixed element (120) indirectly or directly connected to the light blocking sheet set (110), and the fixed element (120) having a sidewall structure (121) and an annular light blocking portion (140), wherein the annular light blocking portion (140) extends toward the optical axis (X) along a direction perpendicular to the optical axis (X), and the annular light blocking portion (140) surrounds the optical axis (X) to form a fixed aperture opening (141); and
a movable element (130) connected to the light blocking sheet set (110);

wherein the sidewall structure (121) of the fixed element (120) extends from an image side to the object side of the imaging lens assembly (11);
wherein the movable element (130) drives the light blocking sheet set (110) to move relative to the fixed element (120), so that an aperture size of the variable aperture opening (112) is variable;

wherein a focal length of the image lens assembly (11) is EFL, a diameter of the fixed aperture opening (141) is Df, a maximum outer diameter of the sidewall structure (121) of the fixed element (120) is Ds, and the following conditions are satisfied:

$$0.5 < EFL/Df < 5.2;$$

and

$$Df < Ds.$$

19. The imaging lens assembly module (10) of claim 18, wherein a shortest distance between the light blocking sheet set (110) and the fixed aperture opening (141) along a direction parallel to the optical axis (X) is d1, and the following condition is satisfied:

$$0 \text{ mm} < d1 < 1.5 \text{ mm}.$$

20. The imaging lens assembly module (10) of claims 18 or 19, wherein the shortest distance between the light blocking sheet set (110) and the fixed aperture opening (141) along the direction parallel to the optical axis (X) is d1, and the following condition is satisfied:

$$0.05 \text{ mm} < d1 < 1.2 \text{ mm}.$$

21. The imaging lens assembly module (10) of any one of claims 18 to 20, wherein the sidewall structure (121) and the annular light blocking portion (140) are integrally formed.

22. The imaging lens assembly module (10) of any one of claims 18 to 21, wherein the variable aperture module (12) further comprises:

a rolling support element (160) disposed between the fixed element (120) and the movable element (130), and the movable element (130) has a rotational degree of freedom along the circumferential direction; and a driving mechanism for driving the movable element (130) to rotate along the circumferential direction and then driving the light blocking sheet set (110) to adjust the aperture size of the variable aperture opening (112).

23. The imaging lens assembly module (10) of any one of claims 18 to 22, wherein the driving mechanism comprises:

at least one coil (171); and at least one magnet (172) disposed along the circumferential direction, wherein the at least one magnet (172) is disposed corresponding to the at least one coil (171).

24. The imaging lens assembly module (10) of any one of claims 18 to 23, wherein the variable aperture module (12) further comprises:
a frame element (150) coupled with the fixed element (120).

25. The imaging lens assembly module (10) of any one of claims 18 to 24, wherein the variable aperture module (12) further comprises:

a rolling support element (160) disposed between the movable element (130) and the frame element (150), and the movable element (130) has a rotational degree of freedom along the circumferential direction; and a driving mechanism for driving the movable element (130) to rotate along the circumferential direction and then driving the light blocking sheet set (110) to adjust the aperture size of the variable aperture opening (112).

26. The imaging lens assembly module (10) of any one of claims 18 to 25, wherein the driving mechanism comprises:

at least one coil (171); and at least one magnet (172) disposed along the circumferential direction, wherein the at least one magnet (172) is disposed corresponding to the at least one coil (171).

27. The imaging lens assembly module (10) of any one of claims 18 to 26, wherein the variable aperture module (12) is coupled with the imaging lens assembly (11).

28. The imaging lens assembly module (10) of any one of claims 18 to 27, wherein the fixed element (120) is physically contacted with the imaging lens assembly (11).

29. The imaging lens assembly module (10) of any one of claims 18 to 28, wherein a shortest distance between the light blocking sheet set (110) and a minimum aperture (O) of the imaging lens assembly (11) along a direction parallel to the optical axis (X) is d2, and the following condition is satisfied:

$$0.1 \text{ mm} < d2 < 2.5 \text{ mm}.$$

30. The imaging lens assembly module (10) of any one of claims 18 to 29, wherein the shortest distance between the light blocking sheet set (110) and the minimum aperture (O) of the imaging lens assembly (11) along the direction parallel to the optical axis (X) is d2, and the following condition is satisfied:

$$0.15 \text{ mm} < d2 < 1.9 \text{ mm}.$$

31. The imaging lens assembly module (10) of any one of claims 18 to 30, wherein a diameter of the minimum aperture (O) of the imaging lens assembly (11) is Db, the diameter of the fixed aperture opening (141) is Df, and the following condition is satisfied:

$$0.2 < Db/Df < 1.$$

32. The imaging lens assembly module (10) of any one of claims 18 to 31, wherein the light blocking sheet set (110) is made of a plastic material.

Fig. 1A

10

181

182

110

112

111

183

141

140

150

172

160

130

120

121

171

11

Fig. 1B

Fig. 1C

Fig. 1D

Fig. 1E

EP 4 379 461 A1

Fig. 1F

EP 4 379 461 A1

Fig. 1G

EP 4 379 461 A1

Fig. 1H

Fig. 1I

EP 4 379 461 A1

Fig. 2A

20

281

282

210

212

211

283

250

272

260

241

240

230

221

220

271

21

Fig. 2B

Fig. 2C

Fig. 2D

EP 4 379 461 A1

Fig. 2E

EP 4 379 461 A1

Fig. 2F

EP 4 379 461 A1

Fig. 2G

Fig. 2H

EP 4 379 461 A1

Fig. 2I

Fig. 3A

Fig. 3B

Fig. 3C

Fig. 3D

EP 4 379 461 A1

Fig. 3E

EP 4 379 461 A1

Fig. 3F

Fig. 3G

EP 4 379 461 A1

Fig. 3H

EP 4 379 461 A1

Fig. 4A

40

481

410

412

411

482

430

472

460

471

440

441

421

420

41

Fig. 4B

Fig. 4C

Fig. 4D

EP 4 379 461 A1

Fig. 4E

Fig. 4F

EP 4 379 461 A1

Fig. 4G

EP 4 379 461 A1

Fig. 4H

Fig. 4I

51

Fig. 5A

EP 4 379 461 A1

Fig. 5B

5D

Fig. 5C

5E

Fig. 5D

Fig. 5E

EP 4 379 461 A1

Fig. 6

Europäisches
Patentamt

European
Patent Office

Office européen
des brevets

# EUROPEAN SEARCH REPORT

Application Number

EP 23 21 2724

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/052039 A1 (HUAWEI TECH CO LTD [CN]) 17 March 2022 (2022-03-17) | 1-4,6-9, 11-20, 22,23, 25-32 | INV. G03B9/06 |
| A | * abstract; figures 1-15 * | 5,10,21, 24 | |
| | ----- | | |
| X | CN 217 484 662 U (LARGAN PRECISION CO LTD) 23 September 2022 (2022-09-23) | 1-9, 11-32 | |
| A | * abstract; figures 3, 4, 5 * | 10 | |
| | ----- | | |
| X | EP 3 812 819 A1 (TDK TAIWAN CORP [TW]) 28 April 2021 (2021-04-28) | 1-6,8,9, 11-20, 23-32 | |
| A | * abstract; figure 1 * | 7,10,21, 22 | |
| | ----- | | |
| X | CN 114 827 483 A (HUAWEI TECH CO LTD) 29 July 2022 (2022-07-29) | 1-9, 11-32 | |
| A | * figures 3-18 * | 10 | TECHNICAL FIELDS SEARCHED (IPC) |
| | ----- | | |
| X | CN 115 268 173 A (HUAWEI TECH CO LTD) 1 November 2022 (2022-11-01) | 1-7, 9-22, 24-32 | G03B |
| A | * abstract; figures 3-5 * | 8,23 | |
| | ----- | | |

The present search report has been drawn up for all claims

| Place of search | Date of completion of the search | Examiner |
|---|---|---|
| Munich | 19 April 2024 | Marot-Lassauzaie, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 2724

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2024

| Patent document cited in search report | | Publication date | Patent family member(s) | | Publication date |
|---|---|---|---|---|---|
| WO 2022052039 | A1 | 17-03-2022 | CN | 116157730 A | 23-05-2023 |
| | | | WO | 2022052039 A1 | 17-03-2022 |
| CN 217484662 | U | 23-09-2022 | BR | 102023006858 A2 | 31-10-2023 |
| | | | CN | 116991017 A | 03-11-2023 |
| | | | CN | 217484662 U | 23-09-2022 |
| | | | EP | 4266123 A1 | 25-10-2023 |
| | | | TW | 202343120 A | 01-11-2023 |
| | | | US | 2023341746 A1 | 26-10-2023 |
| EP 3812819 | A1 | 28-04-2021 | CN | 112799262 A | 14-05-2021 |
| | | | CN | 213750475 U | 20-07-2021 |
| | | | EP | 3812819 A1 | 28-04-2021 |
| | | | US | 2021124144 A1 | 29-04-2021 |
| | | | US | 2023204903 A1 | 29-06-2023 |
| CN 114827483 | A | 29-07-2022 | CN | 114827483 A | 29-07-2022 |
| | | | CN | 117201918 A | 08-12-2023 |
| | | | EP | 4266672 A1 | 25-10-2023 |
| | | | US | 2024088748 A1 | 14-03-2024 |
| | | | WO | 2022161392 A1 | 04-08-2022 |
| CN 115268173 | A | 01-11-2022 | CN | 115268173 A | 01-11-2022 |
| | | | CN | 117008394 A | 07-11-2023 |
| | | | EP | 4318067 A1 | 07-02-2024 |
| | | | WO | 2022228238 A1 | 03-11-2022 |

EPO FORM P0459

For more details about this annex : see Official Journal of the European Patent Office, No. 12/82